# EUROPÄISCHE PATENTSCHRIFT

(11) **EP 3 353 503 B1**
(45) Veröffentlichungstag und Bekanntmachung des Hinweises auf die Patenterteilung: **18.02.2026**
(21) Anmeldenummer: 16763767.7
(22) Anmeldetag: 08.09.2016
(51) Int. Cl.: G01F 1/325, G01F 1/32

(54) **MESSSYSTEM UND VERWENDEN EINES MESSSYSTEMS**
MEASURING SYSTEM AND USING A MEASURING SYSTEM
SYSTÈME DE MESURE ET UTILISATION D'UN SYSTÈME DE MESURE

(30) Priorität: 24.09.2015 DE 102015116147
(43) Veröffentlichungstag der Anmeldung: 01.08.2018
(73) Patentinhaber: Endress+Hauser Flowtec AG, 4153 Reinach (CH)
(72) Erfinder: LAIS, Christian, CH-4142 Münchenstein (CH); STRUB, Andreas, 79576 Weil am Rhein (CH); WIEDERKEHR, Dominique, 62880 Hagenthal-le-bas (FR)
(74) Vertreter: Endress + Hauser Group Services (Deutschland) AG+Co. KG
(86) Internationale Anmeldenummer: PCT/EP2016/071147
(87) Internationale Veröffentlichungsnummer: WO 2017/050583

(56) Entgegenhaltungen:
- DE-A1- 10 249 543
- DE-A1- 10 249 543
- DE-A1- 4 316 067
- DE-A1- 4 316 067
- US-A- 4 803 870
- US-A- 4 803 870
- US-A- 4 986 134
- US-A- 4 986 134
- US-A- 5 313 843
- US-A- 5 313 843
- US-B1- 6 276 218
- US-B1- 6 276 218

## Beschreibung

Die Erfindung betrifft ein Meßsystem bzw. dessen Verwendung zum Erfassen von Druckschwankungen in einem strömenden Fluid und/oder zum Messen wenigstens eines Strömungsparameters eines in einer Rohrleitung strömenden Fluids.

In der Prozeßmeß- und Automatisierungstechnik werden für die Messung von Strömungsgeschwindigkeiten von in Rohrleitungen strömenden Fluiden, insb. schnellströmenden und/oder heißen Gasen und/oder Fluidströmen von hoher Reynoldszahl (Re), bzw. von mit einer jeweiligen Strömungsgeschwindigkeit (u) korrespondierenden Volumen- oder Massen-Durchflußraten oftmals als Vortex-Durchflußmeßgeräte ausgebildete Meßsysteme verwendet. Beispiele für solche, Meßsysteme sind u.a. aus der US 5 313 843 A, der US-A 2006/0230841, der US-A 2008/0072686, der US-A 2011/0154913, der US-A 2011/0247430, der US-A 60 03 384, der US-A 61 01 885, der US-B 63 52 000, der US-B 69 10 387 oder der US-B 69 38 496 bekannt und werden u.a. auch von der Anmelderin selbst angeboten, beispielsweise unter der Warenbezeichnung "PROWIRL D 200", "PROWIRL F 200", "PROWIRL O 200", "PROWIRL R 200".

Die gezeigten Meßsysteme weisen jeweils einen in das Lumen der jeweiligen, beispielsweise nämlich als Anlagenkomponente eines Wärmeversorgungsnetzes oder eines Turbinenkreislaufes ausgebildeten, Rohrleitung bzw. in ein Lumen eines in den Verlauf nämlicher Rohrleitung eingesetzten Meßrohrs hineinragenden, mithin vom Fluid angeströmten Staukörper zum Erzeugen von zu einer sogenannten Kärmänschen Wirbelstrasse aufgereihten Wirbeln innerhalb des unmittelbar stromabwärts des Staukörpers strömenden Teilvolumens des Fluidstroms auf. Die Wirbel werden dabei bekanntlich mit einer von der Strömungsgeschwindigkeit des in einer Hauptströmungsrichtung durch das Meßrohr strömenden Fluids abhängigen Ablöserate (1/f_{Vtx}) am Staukörper generiert.

Ferner weisen die Meßsysteme einen in den Staukörper integrierten bzw. mit diesem verbundenen oder stromabwärts desselben, nämlich im Bereich der Karman'schen Wirbelstrasse in die Strömung, mithin in Lumen der hineinragenden Sensor auf, der dazu dient Druckschwankungen in der im strömenden Fluid ausgebildeten Kärmänschen Wirbelstrasse zu erfassen und in ein die Druckschwankungen repräsentierendes Sensorsignal zu wandeln, nämlich ein - beispielsweise elektrisches oder optisches - Signal zu liefern, das mit einem innerhalb des Fluids herrschenden, infolge gegenläufiger Wirbel stromab des Staukörpers periodischen Schwankungen unterworfenen Druck korrespondiert bzw. das eine mit der Ablöserate der Wirbel korrespondierende Signalfrequenz (~ f_{Vtx}) aufweist.

Der Sensor weist dafür eine mittels eines - zumeist als dünne und im wesentlichen flachen Membran ausgebildeten - Verformungskörper sowie einer sich ausgehend von einer im wesentlichen planaren Oberfläche nämlichen Verformungskörpers erstreckenden - zumeist plattenförmigen bzw. keilförmigen - Sensorfahne gebildete Sensorbaugruppe auf, die dafür eingerichtet ist, in einer quer zur eigentlichen Hauptströmungsrichtung verlaufenden Detektionsrichtung wirkende Druckschwankungen in der Kármánschen Wirbelstrasse zu erfassen, nämlich in mit den Druckschwankungen korrespondierende Bewegungen des Verformungskörpers zu wandeln, derart, daß die Sensorfahne infolge der Druckschwankungen den Verformungskörper elastisch verformende Pendelbewegungen in Detektionsrichtung ausführt, wodurch Verformungskörper und Sensorfahne zu erzwungene Schwingungen um eine gemeinsame statischen Ruhelage angeregt werden. Der Verformungskörper weist ferner ein - zumeist kreisringförmiges - äußeres Randsegment auf, das dafür eingerichtet ist, mit einer dem Haltern des Verformungskörper bzw. des damit gebildeten Sensors an einer Wandung eines Rohrs dienenden Fassung hermetisch dicht, beispielsweise nämlich stoffschlüssige, verbunden zu werden, derart, daß der Verformungskörper eine in der Wandung des Rohrs vorgesehene Öffnung überdeckt bzw. hermetisch verschließt und daß die die Sensorfahne tragende Oberfläche des Verformungskörpers dem Fluid führenden Lumen des Meßrohrs bzw. der Rohrleitung zugewandt ist, mithin die Sensorfahne in nämliches Lumen hineinragt. Nachdem der Verformungsköper typischerweise membranartig bzw. scheibenförmig ausgebildet ist, ist eine Dicke des die Sensorfahne tragenden, gleichwohl durch das äußere Randsegment begrenzten inneren Segments des Verformungskörpers zumeist sehr viel kleiner als ein größter Durchmesser einer durch das äußere Randsegment begrenzten Fläche nämlichen Segments. Um eine ausreichend hohe Meßempfindlichkeit, nämliche eine ausreichend hohe Empfindlichkeit des Sensors auf die zu erfassenden Druckschwankungen zu erzielen, weisen Verformungskörper etablierter Meßsysteme typischerweise ein entsprechendes Durchmesser-zu-Dicke-Verhältnis auf, das etwa in der Größenordnung von 20:1 liegt. Wie u.a. in der eingangs erwähnten US-B 63 52 000 gezeigt, können Sensorbaugruppen der vorbezeichneten Art gelegentlich zudem einen sich ausgehend von einer der die Sensorfahne tragende Oberfläche abgewandten Oberfläche des Verformungskörpers erstreckenden, zumeist stab-, platten- oder hülsenförmig ausgebildeten Ausgleichskörper aufweisen, der im besonderen dazu dient, aus Bewegungen der Sensorbaugruppe resultierenden Kräften bzw. Momenten, beispielsweise infolge von Vibrationen der Rohrleitung, zu kompensieren bzw. daraus resultierende unerwünschte Bewegungen der Sensorfahne zu vermeiden.

Zwecks des Generierens des Sensorsignals umfaßt der Sensor ferner ein entsprechendes, beispielsweise nämlich mittels eines mit der Sensorbaugruppe mechanisch gekoppelten bzw. darin integrierten Kondensator oder mittels eines als piezoelektrischer Wandler dienenden Piezostapel gebildetes, Wandelerelement, das dafür eingerichtet ist, Bewegungen des Verformungskörpers, nicht zuletzt auch mit Druckschwankungen korrespondierende Bewegungen des Verformungskörpers, bzw. des ggf. vorhandenen Ausgleichskörper zu erfassen und einem elektrischen oder optischen Trägersignal aufzumodulieren.

Die Sensorbaugruppe bzw. der damit gebildete Sensor ist auf einer dem Fluid führenden Lumen abgewandten Seite ferner mit einer - typischerweise druck- und schlagfest gekapselten, ggf. auch nach außen hin hermetisch abgedichteten - Umformer-Elektronik verbunden. Umformer-Elektronik industrietauglichen Meßsysteme weisen üblicherweise eine entsprechende, mit dem Wandlerelement via Anschlußleitungen, ggf. unter Zwischenschaltung elektrischer Barrieren und/oder galvanischer Trennstellen, elektrisch verbundene digitale Meßschaltung zum Verarbeiten des wenigstens einen vom Wandlerelement erzeugten Sensorsignals und zum Erzeugen von digitalen Meßwerten für die jeweils zu erfassende Meßgröße, nämlich die Strömungsgeschwindigkeit, die Volumen-Durchflußrate und/oder die Massen-Durchflußrate, auf. Die üblicherweise in einem Schutz-Gehäuse aus Metall und/oder schlagfestem Kunststoff untergebrachte Umformer-Elektronik industrietauglicher bzw. in der industriellen Meßtechnik etablierter Meßsysteme stellen zudem zumeist auch einem Industriestandard, beispielsweise der DIN IEC 60381-1, konforme externe Schnittstellen für die Kommunikation mit übergeordneten, beispielsweise mittels Speicherprogrammierten Steuerungen (SPS) gebildete, Meß- und/oder Reglersysteme bereit. Ein solche externe Schnittstelle kann beispielsweise als in eine Stromschleife eingliederbarer Zweileiter-Anschluß ausgebildete und/oder mit etablierten industriellen Feldbussen kompatible ausgebildet sein.

Nicht zuletzt aufgrund der Meßprinzip bedingt relativ hohen Durchmesser-zu-Dicke-Verhältnisse des Verformungskörpers können konventionelle Sensoren der in Rede stehenden Art - selbst bei Verwendung einer hochfesten Nickelbasislegierung, wie z.B. Inconel 718 (Special Metals Corp.), als Material für den Verformungskörper - zumeist eine Druckfestigkeit, nämlich einen maximal zulässiger Betriebsdruck, oberhalb dem eine nicht reversible plastische Verformung des Sensors bzw. dessen Verformungskörpers, zu besorgen ist, aufweisen, die für in bestimmten Anwendungen gelegentlich tatsächlich auftretende extrem hohe Drücke zu niedrig sein kann; dies regelmäßig auch derart, daß bereits bei nur kurzzeitiger bzw. stoßartiger Überlastung die Integrität des jeweiligen Meßsystems bzw. die dafür deklarierte Meßgenauigkeit nicht mehr garantiert werden kann. Dies u.a. auch in für das in Rede stehende Meßprinzip eigentlich prädestinierten (Heiß-) Dampfanwendungen mit Fluidtemperaturen von über 400°C, bei denen beispielsweise sogenannte kondensationsinduzierte Wasserschlägen (CIWH - condensation induced water hammers) im Bereich des Sensors nicht nur zu extrem hohen dynamischen Drücke von über 140 bar, sondern gelegentlich zu sehr ungleichmäßigen bzw. asymmetrischen Druckverteilungen innerhalb des zu messenden Fluids führen können, derart daß die auf die Sensorfahne währenddessen wirkenden Druckschwankungen, gemessen in Detektionsrichtung, Spitzenwerte von mehr als 20 bar aufweisen und im Ergebnis in solchen Anwendungen vermehrt entsprechende irreversible Deformationen der jeweiligen Sensorbaugruppe, einhergehend mit einem Ausfall des Meßsystems zu beobachten sind.

Ausgehend davon besteht eine Aufgabe der Erfindung darin, das Meßsystem zum Messen wenigstens eines Strömungsparameters dahingehend zu verbessern, daß im Ergebnis ein höhere Druckfestigkeit bzw. eine auch den Einsatz in Heißdampfanwendungen mit Dampftemperaturen von über 400 C und sich gelegentlich stoßartig ändernden Drücken mit Druckspitzen von über 140 bar ermöglichende Abhängigkeit der Druckfestigkeit von der Betriebstemperatur aufweisen.

Zur Lösung der Aufgabe besteht die Erfindung in einem Meßsystem gemäß Anspruch 1.

Darüber hinaus besteht die Erfindung darin, ein vorbezeichnetes Meßsystem zum Messen eines Strömungsparameters - beispielsweise nämlich einer Strömungsgeschwindigkeit und/oder einer Volumendurchflußrate und/oder einer Massendurchflußrate - eines in einer Rohrleitung strömenden, beispielsweise zumindest zeitweise eine Temperatur von mehr als 400°C und/oder zumindest zeitweise mit einem Druck von mehr als 140 bar auf den Verformungskörper und/oder die Sensorfahne des Sensors wirkenden, Fluids, beispielsweise einem Dampf, zu verwenden.

Nach einer Ausführungsform der Erfindung ist vorgesehen, daß die Überlastschutzvorrichtung an einem dem Randsegment des Verformungskörpers zugewandten Ende ein, beispielsweise ringförmiges, Verbindungelement aufweist.

Diese Ausgestaltung der Erfindung weiterbildend ist ferner vorgesehen, daß das Verbindungelement sowie der Stützbügel integrale Bestandteile ein und desselben monolithischen Formteils sind. Alternativ können Stützbügel und Verbindungelement, beispielsweise stoffschlüssig, miteinander verbunden bzw. zusammengefügt, beispielsweise nämlich miteinander verschweißt, sein.

Darüberhinaus können das Verbindungelement der Überlastschutzvorrichtung und das Randsegment des Verformungskörpers, beispielsweise stoffschlüssig, miteinander verbunden bzw. gefügt, beispielsweise nämlich miteinander verschweißt, sein.

Nach einer weiteren Ausführungsform der Erfindung ist vorgesehen, daß Verformungskörper, Sensorfahne und Überlastschutzvorrichtung so bemessen und angeordnet sind, daß bei gemeinsam mit dem Verformungskörper in gemeinsamer statischer Ruhelage befindlicher Sensorfahne diese weder den Stützbügel, noch einen der Anschläge kontaktiert.

Nach einer weiteren Ausführungsform der Erfindung ist vorgesehen, daß Verformungskörper, Sensorfahne und Überlastschutzvorrichtung so bemessen und angeordnet sind, daß bei gemeinsam mit dem Verformungskörper in gemeinsamer statischer Ruhelage befindlicher Sensorfahne zwischen der Sensorfahne und jedem der beiden Anschläge jeweils ein Spalt gebildet ist, beispielsweise derart, daß jeder der Spalt jeweils eine minimale Spaltbreite aufweist, die größer als 0,02 mm und/oder kleiner als 0,2 mm ist, und/oder daß die Sensorfahne keinen der Anschläge kontaktiert.

Nach einer weiteren Ausführungsform der Erfindung ist vorgesehen, daß Verformungskörper, Sensorfahne und Überlastschutzvorrichtung so bemessen und angeordnet sind, daß bei gemeinsam mit dem Verformungskörper in gemeinsamer statischer Ruhelage befindlicher Sensorfahne zwischen der Sensorfahne und dem Stützbügel ein Spalt gebildet ist, beispielsweise derart, daß der Spalt eine minimale Spaltbreite aufweist, die größer als 0,02 mm und/oder daß die Sensorfahne den Stützbügel nicht kontaktiert.

Nach der vorliegenden Erfindung ist vorgesehen, daß Verformungskörper, Sensorfahne und Überlastschutzvorrichtung so bemessen und angeordnet sind, daß bei gemeinsam mit dem Verformungskörper in einer von der gemeinsamen statischen Ruhelage abweichenden gemeinsamen ersten Endlage befindlicher Sensorfahne diese den ersten Anschlag kontaktiert, beispielsweise den Stützbügel aber nicht kontaktiert.

Nach der vorliegenden Erfindung ist vorgesehen, daß Verformungskörper, Sensorfahne und Überlastschutzvorrichtung so bemessen und angeordnet sind, daß bei gemeinsam mit dem Verformungskörper in einer von der gemeinsamen statischen Ruhelage wie auch von der gemeinsamen ersten Endlage abweichenden gemeinsamen zweiten Endlage befindlicher Sensorfahne diese den zweiten Anschlag kontaktiert, beispielsweise den Stützbügel aber nicht kontaktiert.

Erfindungsgemäß sind der Verformungskörper, die Sensorfahne und die Überlastschutzvorrichtung ferner so bemessen und angeordnet, daß sowohl eine mit der ersten Endlage korrespondierende Deformation des Verformungskörpers als auch eine mit der zweiten Endlage korrespondierende Deformation des Verformungskörpers lediglich elastisch, beispielsweise linear-elastisch, ist, mithin nämliche Deformation des Verformungskörpers nicht plastisch ist.

Nach einer weiteren Ausführungsform der Erfindung ist vorgesehen, daß die Sensorfahne einen, beispielsweise endständigen und/oder stiftförmigen, Fortsatz aufweist, und daß Verformungskörper, Sensorfahne und Überlastschutzvorrichtung so bemessen und angeordnet sind, daß nämlicher Fortsatz in den zwischen den Anschlägen gebildeten Zwischenraum hineinragt.

Darüber hinaus ist vorgesehen, daß die Anschläge durch Randsegmente einer im Stützbügel vorgesehenen - beispielsweise als Durchgangsöffnung oder als Bohrung ausgebildeten - Ausnehmung und der Zwischenraum durch ein von den Randsegmenten umschlossenes Lumen nämlicher Ausnehmung gebildet sind.

Nach einer weiteren Ausführungsform der Erfindung ist vorgesehen, daß der Stützbügel zumindest teilweise linksseitig der Sensorfahne geführt ist.

Nach einer weiteren Ausführungsform der Erfindung ist vorgesehen, daß der Stützbügel zumindest teilweise rechtsseitig der Sensorfahne geführt ist.

Nach einer weiteren Ausführungsform der Erfindung ist vorgesehen, daß der Stützbügel zumindest teilweise frontseitig der Sensorfahne geführt ist.

Nach einer weiteren Ausführungsform der Erfindung ist vorgesehen, daß der Stützbügel zumindest teilweise rückseitig der Sensorfahne geführt ist.

Nach einer weiteren Ausführungsform der Erfindung ist vorgesehen, daß die Überlastschutzvorrichtung mittels eines einzigen monolithischen Formteils gebildet ist.

Nach einer weiteren Ausführungsform der Erfindung ist vorgesehen, daß der erste Anschlag, der zweite Anschlag sowie der Stützbügel integrale Bestandteile ein und desselben monolithischen Formteils sind.

Nach einer weiteren Ausführungsform der Erfindung ist vorgesehen, daß die Anschläge zumindest teilweise durch Randsegmente einer im Stützbügel vorgesehenen Ausnehmung gebildet sind.

Nach einer weiteren Ausführungsform der Erfindung ist vorgesehen, daß der Zwischenraum zumindest teilweise durch ein Lumen einer im Stützbügel vorgesehenen Ausnehmung gebildet ist.

Nach einer weiteren Ausführungsform der Erfindung ist vorgesehen, daß die Überlastschutzvorrichtung zumindest anteilig, beispielsweise überwiegend oder vollständig, aus einem Metall, beispielsweise einem Edelstahl bzw. einer Nickelbasislegierung, besteht.

Nach einer weiteren Ausführungsform der Erfindung ist vorgesehen, daß Verformungskörper und Überlastschutzvorrichtung aus einem gleichen Material bestehen.

Nach einer weiteren Ausführungsform der Erfindung ist vorgesehen, daß Verformungskörper und Überlastschutzvorrichtung Bestandteile ein und desselben, beispielsweise gegossenen oder durch 3D-Laserschmelzen hergestellten, monolithischen Formteils sind.

Nach einer weiteren Ausführungsform der Erfindung ist vorgesehen, daß Verformungskörper und Überlastschutzvorrichtung stoffschlüssig miteinander verbunden, beispielsweise nämlich miteinander verschweißt bzw. verlötet, sind.

Nach einer weiteren Ausführungsform der Erfindung ist vorgesehen, daß Verformungskörper und Sensorfahne stoffschlüssig miteinander verbunden, beispielsweise nämlich miteinander verschweißt bzw. verlötet, sind.

Nach einer weiteren Ausführungsform der Erfindung ist vorgesehen, daß das äußere Randsegment dafür eingerichtet ist, mit einer dem Haltern des Verformungskörpers an einer Wandung eines Rohrs dienenden Fassung, beispielsweise stoffschlüssige und/oder hermetisch dicht, verbunden zu werden, beispielsweise derart, daß der Verformungskörper eine in der Wandung des Rohrs vorgesehene Öffnung überdeckt, beispielsweise nämlich hermetisch verschließt, und/oder derart, daß die erste Oberfläche des Verformungskörpers einem Lumen des Rohrs zugewandt ist, mithin die Sensorfahne in nämliches Lumen hineinragt.

Nach einer weiteren Ausführungsform der Erfindung ist vorgesehen, daß in dem äußere Randsegment wenigstens eine, beispielsweise umlaufende und/oder kreisringartige, Dichtfläche ausgebildet ist.

Nach einer weiteren Ausführungsform der Erfindung ist vorgesehen, daß der Verformungskörper zumindest anteilig, beispielsweise überwiegend oder vollständig, aus einem Metall, beispielsweise einem Edelstahl bzw. einer Nickelbasislegierung, besteht.

Nach einer weiteren Ausführungsform der Erfindung ist vorgesehen, daß die Sensorfahne zumindest anteilig, beispielsweise überwiegend oder vollständig, aus einem Metall, beispielsweise einem Edelstahl bzw. einer Nickelbasislegierung, besteht.

Nach einer weiteren Ausführungsform der Erfindung ist vorgesehen, daß Verformungskörper und Sensorfahne aus einem gleichen Material bestehen.

Nach einer weiteren Ausführungsform der Erfindung ist vorgesehen, daß Verformungskörper und Sensorfahne Bestandteile ein und desselben, beispielsweise gegossenen oder durch 3D-Laserschmelzen hergestellten, monolithischen Formteils sind.

Nach einer weiteren Ausführungsform der Erfindung ist vorgesehen, daß der Stützbügel eine U-förmige Silhouette aufweist. Alternativ kann der Stützbügel beispielsweise auch eine V-förmige Silhouette oder eine L-förmige Silhouette aufweisen.

Nach einer weiteren Ausführungsform der Erfindung ist vorgesehen, daß in der Wandung des Rohrs eine, beispielsweise eine dem Haltern des Verformungskörpers an der Wandung dienende Fassung aufweisende, Öffnung ausgebildet ist, und daß der Sensor in nämliche Öffnung eingesetzt ist, derart, daß der Verformungskörper die Öffnung überdeckt, beispielsweise nämlich hermetisch verschließt, und daß die erste Oberfläche des Verformungskörpers dem Lumen des Rohrs zugewandt ist, mithin die Sensorfahne in nämliches Lumen hineinragt.

Nach einer weiteren Ausführungsform der Erfindung ist vorgesehen, daß die Öffnung eine dem Haltern des Verformungskörpers an der Wandung dienende Fassung aufweist. In nämlicher Fassung kann ferner wenigstens eine, beispielsweise umlaufende und/oder kreisringartige, Dichtfläche ausgebildet sein. Darüberhinaus kann zudem auch im Randsegment wenigstens eine, beispielsweise umlaufende und/oder kreisringartige, Dichtfläche ausgebildet sein, und können nämliche Dichtfläche sowie die Dichtfläche der Fassung für ein hermetisches Verschließen der Öffnung, beispielsweise auch unter Zwischenlage wenigstens einer Dichtung, eingerichtet sein.

Erfindungsgemäßes Meßsystem umfaßt ein in den Verlauf der Rohrleitung einsetzbares Rohr mit einem Lumen, das dafür eingerichtet ist, das in der Rohrleitung strömende Fluid zu führen, wobei der Sensor in nämliches Rohr eingesetzt ist, derart, daß die erste Oberfläche des Verformungskörpers dem Lumen des Rohrs zugewandt ist und die Sensorfahne in nämliches Lumen hineinragt.

Erfindungsgemäß ist vorgesehen, daß die Sensorfahne eine Länge, gemessen als minimaler Abstand zwischen einem proximalen, nämlich an den Verformungskörper grenzenden Ende der Sensorfahne bis zu einem distalen, nämlich vom Verformungskörper bzw. dessen Oberfläche entfernten Ende der Sensorfahne aufweist, wobei die Länge weniger als 95% eines Kalibers des Rohrs und/oder mehr als einer Hälfte nämlichen Kalibers entspricht.

Erfindungsgemäß ist vorgesehen, daß die Überlastschutzvorrichtung eine Länge, gemessen als minimaler Abstand zwischen einem proximalen, nämlich an den Verformungskörper grenzenden Ende der Überlastschutzvorrichtung bis zu einem distalen, nämlich vom Verformungskörper bzw. dessen Oberfläche entfernten Ende der Überlastschutzvorrichtung aufweist, welche Länge weniger als 95% eines Kalibers des Rohrs und/oder mehr als einer Hälfte nämlichen Kalibers entspricht. Nach einer zweiten Weiterbildung des Meßsystems der Erfindung umfaßt dieses weiters ein in den Verlauf der Rohrleitung einsetzbares Rohr mit einem Lumen, das dafür eingerichtet ist, das in der Rohrleitung strömende Fluid zu führen, wobei in der Wandung des Rohrs eine, insb. eine dem Haltern des Verformungskörpers an der Wandung dienende Fassung aufweisende, Öffnung ausgebildet ist, und wobei der Sensor in nämliche Öffnung eingesetzt ist, derart, daß der Verformungskörper die Öffnung überdeckt, insb. nämlich hermetisch verschließt, und daß die erste Oberfläche des Verformungskörpers dem Lumen des Rohrs zugewandt ist, mithin die Sensorfahne in nämliches Lumen hineinragt.

Erfindungsgemäßes Meßsystem umfaßt einen im Lumen des Rohrs angeordneten Stauköper, der dafür eingerichtet ist, im strömendem Fluid eine Kármánsche Wirbelstrasse zu bewirken.

Die Erfindung sowie vorteilhafte Ausgestaltungen davon werden nachfolgend anhand von Ausführungsbeispielen näher erläutert, die in den Figuren der Zeichnung dargestellt sind. Gleiche bzw. gleichwirkende oder gleichartig fungierende Teile sind in allen Figuren mit denselben Bezugszeichen versehen; wenn es die Übersichtlichkeit erfordert oder es anderweitig sinnvoll erscheint, wird auf bereits erwähnte Bezugszeichen in nachfolgenden Figuren verzichtet. Die vorliegende Erfindung ist in den beigefügten Ansprüchen 1-19 definiert.

Im einzelnen zeigen:
- Fig. 1, 2: schematisch in verschieden Ansichten ein - hier als Wirbel-Durchflußmeßgerät ausgebildetes - Meßsystem mit einem Sensor und einer Meß-Elektronik zum Messen wenigstens eines Strömungsparameters eines in einer Rohrleitung strömenden Fluids;
- Fig. 3a, 3b, 3c, 3d: schematisch, teilweise auch geschnittenen Ansichten einer (ersten Variante) einer Sensorbaugruppe für einen, insb. für die Verwendung in einem Meßsystem gemäß der Fig. 1 bzw. 2 geeigneten, Sensor;
- Fig. 4a, 4b 4c, 4d: schematisch in zwei verschiedenen geschnittenen Seitenansichten eine weitere, zweite Variante einer Sensorbaugruppe für einen, insb. zur Verwendung in einem Meßsystem gemäß der Fig. 1 bzw. 2 geeigneten, Sensor;
- Fig. 5a, 5b 5c, 5d: schematisch in zwei verschiedenen geschnittenen Seitenansichten eine weitere, dritte Variante einer Sensorbaugruppe für einen, insb. zur Verwendung in einem Meßsystem gemäß der Fig. 1 bzw. 2 geeigneten, Sensor;
- Fig. 6a, 6b 6c, 6d: schematisch in zwei verschiedenen geschnittenen Seitenansichten eine weitere, vierte Variante einer Sensorbaugruppe für einen, insb. zur Verwendung in einem Meßsystem gemäß der Fig. 1 bzw. 2 geeigneten, Sensor; und
- Fig. 7a, 7b 7c, 7d: schematisch in zwei verschiedenen geschnittenen Seitenansichten eine weitere, fünfte Variante einer Sensorbaugruppe für einen, insb. zur Verwendung in einem Meßsystem gemäß der Fig. 1 bzw. 2 geeigneten, Sensor.

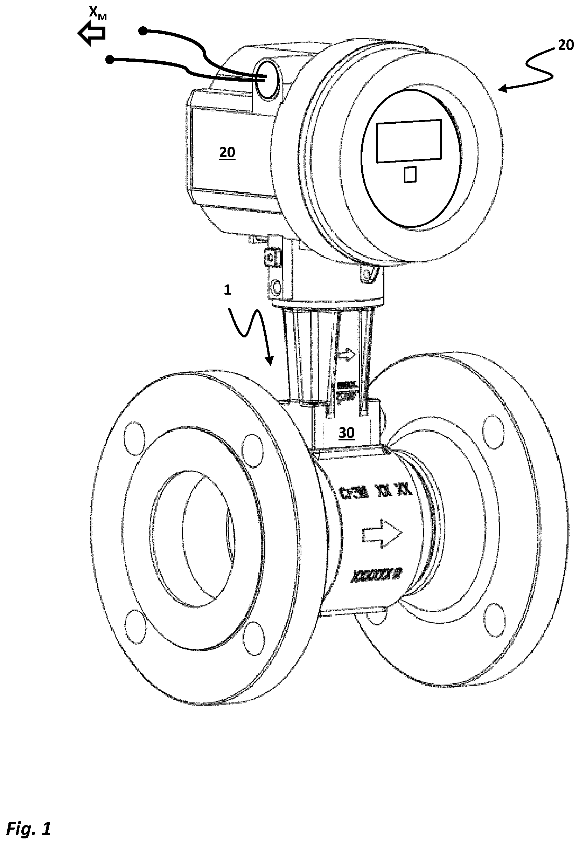

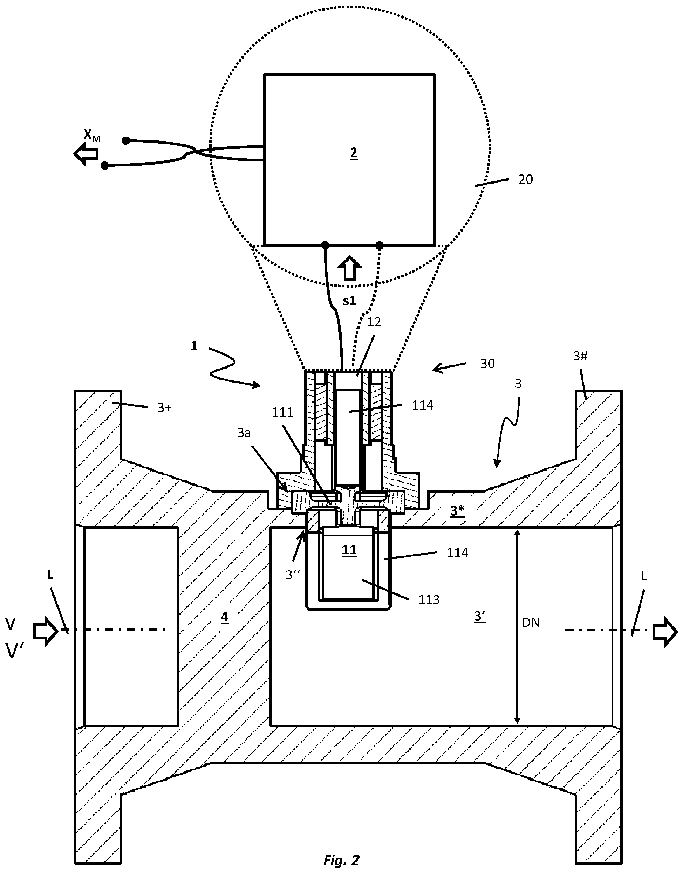

In Fig. 1 und 2 ist ein Ausführungsbeispiel für ein Meßsystem zum Messen wenigstens eines, ggf. auch zeitlich veränderlichen Strömungsparameters, wie z.B. einer Strömungsgeschwindigkeit v und/oder einer Volumendurchflußrate V', eines in einer Rohrleitung strömenden Fluids, beispielsweise eines heißen, insb. zumindest zeitweise eine Temperatur von mehr als 400°C aufweisenden, und/oder zumindest zeitweise unter einem hohen Druck, insb. von mehr als 140 bar, stehenden Gases, gezeigt. Die Rohrleitung kann beispielsweise als Anlagenkomponente eines Wärmeversorgungsnetzes oder eines Turbinenkreislaufes ausgebildet, mithin kann das Fluid beispielsweise Dampf, insb. auch gesättigter Dampf oder überhitzter Dampf, oder beispielsweise auch ein aus einer Dampfleitung abgeführtes Kondensat sein. Fluid kann aber beispielsweise auch ein (komprimiertes) Erd- oder ein Biogas sein, mithin kann die Rohrleitung beispielsweise auch Komponente einer Erd- oder einer Biogasanlage oder einer Gasversorgungsnetzes sein.

Das Meßsystem weist einen Sensor 1 auf, der dafür vorgesehen bzw. ausgestaltet ist, Druckschwankungen im in einer Hauptströmungsrichtung am Sensor vorbei strömenden Fluid zu erfassen und in ein mit nämlichen Druckschwankungen korrespondierendes, beispielsweise elektrisches oder optisches, Sensorsignal s1 zu wandeln. Wie aus der Zusammenschau der Fig. 1 und 2 ersichtlich, umfaßt das Meßsystem desweiteren, eine - beispielsweise in einem druckund/oder schlagfesten Schutzgehäuse 20 untergebrachte - Meß-Elektronik 2, die an den Sensor 1 angeschlossen ist bzw. im Betrieb des Meßsystems mit dem Sensor 1 kommuniziert. Die Meß-Elektronik 2 ist im besonderen dafür eingerichtet, das Sensorsignal s1 zu empfangen und zu verarbeiten, beispielsweise nämlich den wenigstens einen Strömungsparameters, beispielsweise also die Strömungsgeschwindigkeit v bzw. die Volumendurchflußrate V', repräsentierende Meßwerte X_{M} zu generieren. Die Meßwerte X_{M} können beispielsweise vor Ort visualisiert und/oder - drahtgebunden via angeschlossenen Feldbus und/oder drahtlos per Funk - an ein elektronisches Datenverarbeitungssystem, etwa eine Speicherprogrammierbare Steuerung (SPS) und/oder einen Prozeßleitstand, übermittelt werden. Das Schutzgehäuse 20 für die Meß-Elektronik 2 kann beispielsweise aus einem Metall, etwa einem Edelstahl oder Aluminium, und/oder mittels eines Gießverfahrens, wie z.B. einem Feinguß- oder einem Druckgußverfahren (HPDC), hergestellt sein; es kann aber beispielsweise auch mittels eines in einem Spritzgießverfahren hergestellten Kunststoffformteils gebildet sein.

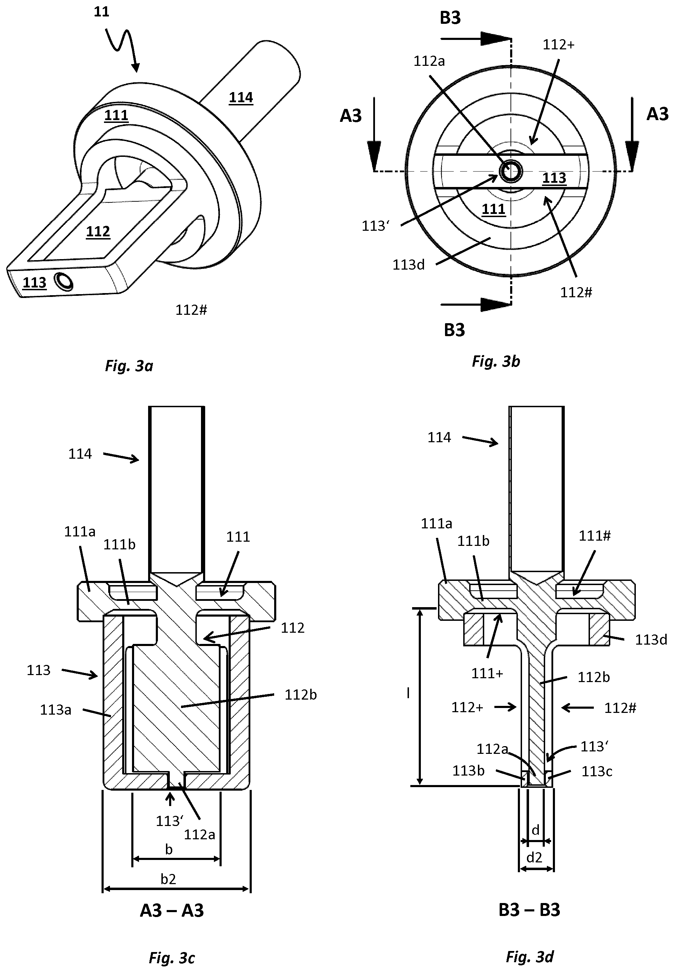

Der Sensor 1 umfaßt, wie auch in Fig. 2 und den Fig. 3a, 3b, 3c, 3d jeweils dargestellt bzw. aus einer Zusammenschau nämlicher Figuren ohne weiteres ersichtlich, eine Sensorbaugruppe 11, die mittels eines, insb. membranartigen bzw. scheibenförmigen, Verformungskörpers 111 sowie einer eine linksseitige erstes Seitenfläche 112+ sowie eine rechtsseitige zweite Seitenfläche 112# aufweisenden Sensorfahne 112 gebildet ist, die sich ausgehend von einer ersten Oberfläche 111+ des Verformungskörpers 111 bis zu einem distalen, nämlich vom Verformungskörper 111 bzw. dessen Oberfläche 111+ entfernten (freien) Ende erstreckt. Der Verformungskörper 111 weist ferner eine der ersten Oberfläche 111+ gegenüberliegende, beispielsweise zur ersten Oberfläche 111+ zumindest teilweise parallele, zweite Oberfläche 111# sowie ein, beispielsweise kreisringförmiges und/oder mit einer Dichtfläche versehenes, äußeres Randsegment 111a auf. Das äußere Randsegment 111a hat eine Dicke, die - wie in den Fig. 2 bzw. 3a, 3b, 3c, 3d angedeutet - im Vergleich zu einer minimalen Dicke eines von nämlichem Randsegment 111a eingeschlossen inneren - hier nämlich die Sensorfahne 112 tragenden - Segment 111b wesentlich größer ist.

Verformungskörper 111 und Sensorfahne 112 der erfindungsgemäßen Sensorbaugruppe 11 sind im besonderen dafür eingerichtet, zu - typischerweise erzwungenen - Schwingungen um eine gemeinsame statischen Ruhelage angeregt zu werden, derart, daß die Sensorfahne 112 den Verformungskörper 111 elastisch verformende Pendelbewegungen in einer - im wesentlichen quer zur vorbezeichneten Hauptströmungsrichtung verlaufenden - Detektionsrichtung ausführt. Die Sensorfahne 112 weist dementsprechend eine Breite b, gemessen als eine maximale Erstreckung in Richtung der Hauptströmungsrichtung, auf die wesentlich größer ist, als eine Dicke d der Sensorfahne 112, gemessen als eine maximale seitlich Erstreckung in Richtung der Detektionsrichtung. Im in den Fig. 3a, 3b, 3c, 3d dargestellten Ausführungsbeispiel ist die Sensorfahne 112 zudem im wesentlichen keilförmig ausgebildet; sie kann aber beispielsweise auch, wie bei derartigen Sensorbaugruppen bzw. damit gebildeten Sensoren durchaus üblich, als eine relativ dünne, ebene Platte ausgebildet sein.

Verformungskörper 111 und Sensorfahne 112 können desweiteren beispielsweise Bestandteile ein und desselben monolithischen Formteils sein, das beispielsweise gegossen oder durch ein generatives Verfahren, wie etwa 3D-Laserschmelzen, hergestellt ist; Verformungskörper und Sensorfahne können aber auch als zunächst voneinander getrennte bzw. erst nachträglich stoffschlüssig miteinander verbundene, beispielsweise nämlich miteinander verschweißte bzw. verlötete, Einzelteile ausgebildet, mithin aus entsprechend stoffschlüssig miteinander verbindbaren Materialien hergestellt sein. Der Verformungskörper 111 kann - wie bei derartigen Sensorbaugruppen durchaus üblich - zumindest anteilig, beispielsweise nämlich überwiegend oder vollständig, aus einem Metall, wie z.B. Edelstahl bzw. einer Nickelbasislegierung, bestehen. Ebenso kann auch die Sensorfahne zumindest anteilig aus einem Metall, beispielsweisenämlich einem Edelstahl bzw. einer Nickelbasislegierung, bestehen; insbesondere können der Verformungskörper 111 und die Sensorfahne 112 auch aus dem gleichen Material hergestellt werden.

Neben der Sensorbaugruppe 11 umfaßt der Sensor desweiteren ein - beispielsweise als piezoelektrischer Wandler, als Komponente eines Kondensators ausgebildetes, kapazitives oder beispielsweise auch als Komponente eines Fotodetektor ausgebildetes, optisches - Wandlerelement 12 zum Generieren eines zeitlich ändernde - typischerweise nämlich zumindest zeitweise periodische - Bewegungen der Sensorfahne bzw. gleichermaßen zeitlich ändernde Verformungen des Verformungskörpers 111 repräsentierenden, hier auch als Sensorsignal dienenden Signals, beispielsweise eine durch die vorbezeichneten Bewegungen modulierte veränderliche elektrische Spannung oder entsprechend moduliertes Laserlicht.

Nach einer weiteren Ausgestaltung der Erfindung umfaßt das Meßsystem ferner ein in der Verlauf der vorbezeichneten Rohrleitung einsetzbares Rohr 3 mit einem von einer - beispielsweise metallischen - Wandung 3* des Rohrs umhüllten Lumen 3', das sich von einem Einlaßende 3+ bis zu einem Auslaßende 3# erstreckt und das dafür eingerichtet ist, das in der Rohrleitung strömende Fluid zu führen. Der Sensor 1 ist zudem in nämliches Rohr eingesetzt, derart, daß die erste Oberfläche des Verformungskörpers 111 dem Lumen 3' des Rohrs zugewandt ist, mithin die Sensorfahne in nämliches Lumen hineinragt. Im hier gezeigten Ausführungsbeispiel ist am Einlaßende 3+ wie auch am Auslaßende 3# ferner jeweils ein dem Herstellen einer leckfreien Flanschverbindung mit jeweils einem korrespondierenden Flansch an einem ein- bzw. auslaßseitig Leitunsgsegment der Rohrleitung dienender Flansch vorgesehen. Desweiteren kann das Rohr 3, wie in Fig. 1 oder 2 dargestellt, im wesentlichen gerade, beispielsweise nämlich als Hohlzylinder mit kreisförmigem Querschnitt ausgebildet sein, derart, daß das Rohr 3 eine das Einlaßende 3+ und das Auslaßende 3# imaginär verbindende gedachte gerade Längsachse L aufweist. Der Sensor 1 ist im in Fig. 1 bzw. 2 gezeigten Ausführungsbeispiel von außen durch eine in der Wandung eingeformte Öffnung 3" hindurch in das Lumen des Rohrs eingeführt und im Bereich nämlicher Öffnung - beispielsweise auch wieder lösbar - von außen an der Wandung 3* fixiert, und zwar so, daß die Oberfläche 111+ des Verformungskörpers 111 dem Lumen 3' des Rohrs 3 zugewandt ist, mithin die Sensorfahne 112 in nämliches Lumen hineinragt. Insbesondere ist der Sensor 1 so in die Öffnung 3"eingesetzt, daß der Verformungskörper 111 die Öffnung 3" überdeckt bzw. hermetisch verschließt. Nämliche Öffnung kann beispielsweise so ausgebildet sein, daß sie- wie bei Meßsystemen der in Rede stehenden Art durchaus üblich - einen (Innen-) Durchmesser aufweist, der in einem Bereich zwischen 10 mm und ca. 50 mm liegt.

Nach einer weiteren Ausgestaltung der Erfindung ist in der der Öffnung 3" eine dem Haltern des Verformungskörpers an der Wandung 3* dienende Fassung 3a ausgebildet. Der Sensor 1 kann hierbei beispielsweise durch stoffschlüssiges Verbinden, insb. nämlich durch Verschweißen oder Verlöten, von Verformungskörper 111 und Wandung 3* am Rohr 3 fixiert sein; er kann aber beispielsweise auch mit dem Rohr 3 lösbar verbundenen, beispielsweise nämlich ver- bzw. angeschraubt sein. In der der Fassung 3a kann ferner wenigstens eine, beispielsweise auch umlaufende bzw. kreisringartige, Dichtfläche ausgebildet sein, die dafür eingerichtet ist, im Zusammenspiel mit dem Verformungskörper 111 und einem ggf. vorgesehenen, beispielsweise ringförmige oder ringscheibenförmige, Dichtelement die Öffnung 3" entsprechend abzudichten. Nicht zuletzt für den Fall, daß die Sensorbaugruppe in die vorbezeichnete Fassung 3a eingesetzt und lösbar mit dem Rohr 3 verbunden werden soll, kann auch das Randsegment 111a des Verformungskörpers 111 in vorteilhafter Weise ferner mit einer, beispielsweise auch mit der in der Öffnung 3" ggf. vorgesehenen Dichtfläche korrespondierenden und/oder kreisringartigen, Dichtfläche versehen sein.

Im hier gezeigten Ausführungsbeispiel ist das Meßsystem speziell als ein Wirbel-Durchflußmeßgrät mit einem im Lumen des Rohrs 3 - hier nämlich stromaufwärts des Sensors 1 - angeordneten, dem Bewirken einer Kármánsche Wirbelstrasse im strömenden Fluid dienenden Stauköper 4 ausgebildet.

Sensor und Staukörper sind hierbei im besonderen so dimensioniert und angeordnet, daß die Sensorfahne 112 in einem solchen Bereich in das Lumen 3* des Rohrs bzw. das darin geführte Fluid hineinragt, der im Betrieb des Meßsystems regelmäßig von einer (stationär ausgebildeten) Kármánschen Wirbelstrasse eingenommen wird, so daß die mittels des Sensors 1 erfaßten Druckschwankungen durch am Staukörper 4 mit einer Ablöserate (~ 1/f_{Vtx}) abgelöste gegenläufige Wirbel verursachte periodische Druckschwankungen sind und das Sensorsignal s1 eine mit der Ablöserate nämlicher Wirbel korrespondierende Signalfrequenz (~ f_{Vtx}) aufweist. Im hier gezeigten Ausführungsbeispiel ist das Wirbel-Durchflußmeßgrät zudem als ein Meßsystem in Kompaktbauweise ausgebildet, bei dem die Meß-Elektronik 2 in einem - beispielsweise mittels eines halsförmigen Anschlußstutzen 30 - am Rohr gehalterten Schutzgehäuse 20 untergebracht ist.

Nach einer weiteren Ausgestaltung der Erfindung sind der Sensor 1 und das Rohr 3 ferner so dimensioniert, daß eine Länge l der Sensorfahne 112, gemessen als minimaler Abstand zwischen einem proximalen, nämlich an den Verformungskörper 111 grenzenden Ende der Sensorfahne 112 bis zum distalen Ende der Sensorfahne 112 mehr als einer Hälfte eines Kalibers DN des Rohrs 3 bzw. weniger als 95% nämlichen Kalibers DN entspricht. Die Länge l kann beispielsweise - wie bei vergleichsweise kleinem Kaliber von weniger als 50 mm durchaus üblich - auch so gewählt sein, daß nämliches distales Ende der Sensorfahne 112 nur noch einen sehr geringen minimalen Abstand zur Wandung 3* des Rohrs 3 aufweist. Bei Rohren mit vergleichsweise großem Kaliber von 50 mm oder mehr kann die Sensorfahne 112 - wie bei Meßsystemen der in Rede stehenden Art durchaus üblich bzw. wie auch aus der Fig. 2 ersichtlich - beispielsweise auch deutlich kürzer ausgebildet sein, als eine Hälfte eines Kalibers des Rohrs 3.

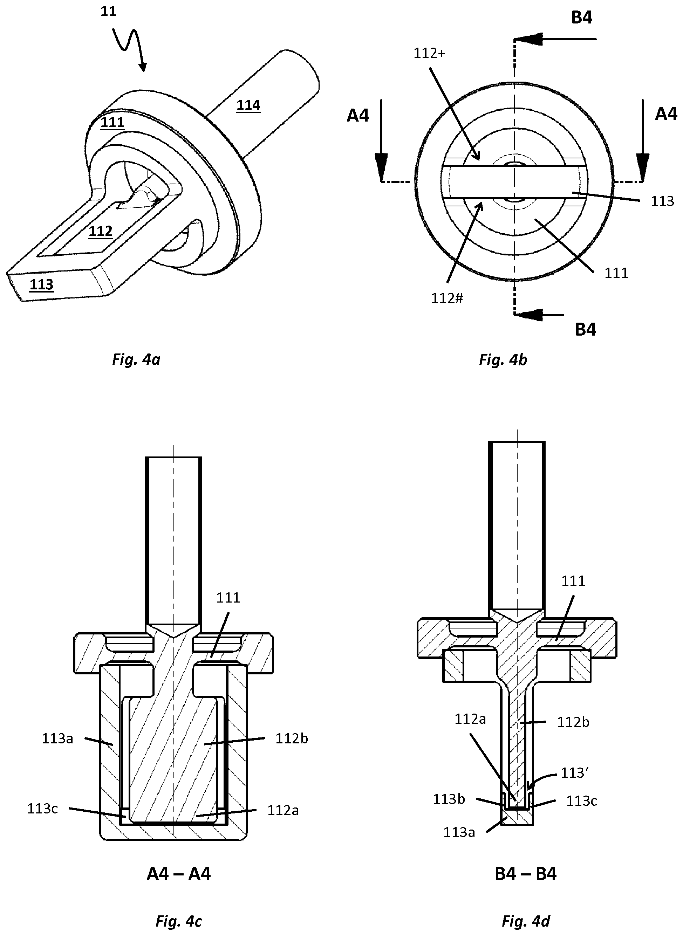

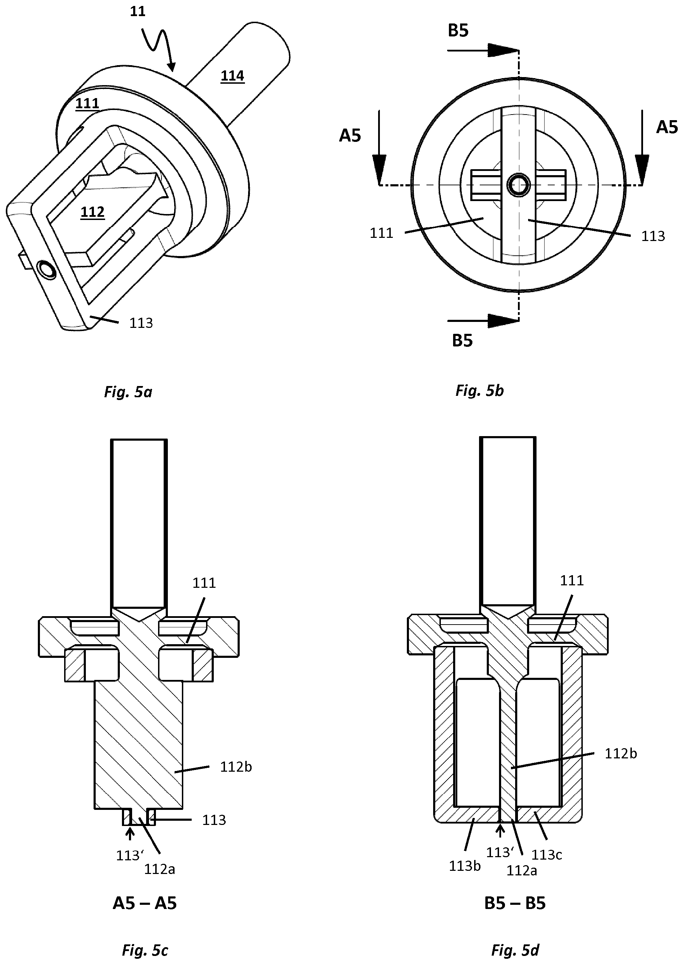

Wie bereits erwähnt, ist die Sensorbaugruppe, mithin der damit gebildete Sensor bzw. das damit gebildete Meßsystem im besonderen dafür vorgesehen, in solchen Meßstellen eingesetzt zu werden, bei denen im zu messende Fluid, beispielsweise aufgrund von kondensationsinduzierten Wasserschlägen (CIWH), kurzeitig extrem hohe dynamische Drücken auftreten können, derart, daß die in Detektionsrichtung auf den Sensor 1 wirkenden Druckschwankungen Spitzenwerte von mehr als 20 bar aufweisen, nämlich mit einem Überdruck von mehr als 20bar auf die linksseitige erste Seitenfläche der Sensorfahne oder mit einer Überdruck von mehr als 20bar auf die rechtsseitige zweite Seitenfläche der Sensorfahne wirken können, einhergehend mit entsprechend hohen asymmetrischen Belastungen der Sensorfahne und des Verformungskörpers. Zur Vermeidung von Überbelastungen des Verformungskörpers infolge asymmetrisch auf die Sensorfahne wirkender Druckschwankungen, insb. auch mit Spitzenwerten von mehr als 20 bar, bzw. von damit einhergehenden plastischen bzw. anderweitig irreversiblen Deformationen der Sensorbaugruppe, insb. des Verformungskörpers, weist die erfindungsgemäße Sensorbaugruppe 1, wie auch in den Fig. 2, 3c, 3d, jeweils schematisch dargestellt, ferner eine sich ausgehend von dem Randsegment 111a bis zu einem distalen, nämlich vom Randsegment 111a, mithin vom Verformungskörper entfernten Ende erstreckende Überlastschutzvorrichtung 113 auf, von der noch weitere Varianten auch in den Fig. 4a-d, 5a-d, 6a-d bzw. 7a-d gezeigt sind. Die Überlastschutzvorrichtung 113 ist mittels eines im seitlichen Abstand zur Sensorfahne 112 geführten Stützbügels 113a sowie mittels zweier vom Stützbügel gehalterter Anschläge 113b, 113c für die Sensorfahne 112 gebildet, von welchen Anschlägen ein erster Anschlag 113b linksseitig der Sensorfahne 112 und ein zweiter Anschlag 113c rechtsseitig der Sensorfahne 112 plaziert sind. Nämliche Anschläge 113b, 113c sind zudem so bemessen und angeordnet, daß ein dazwischen gebildeter Zwischenraum 113' lediglich einen ausgewählten, beispielsweise nämlich rand- bzw. endständigen und/oder stift- bzw. zapfenförmigen, ersten Teilbereich 112a der Sensorfahne 112 aufnimmt, gleichwohl einen sich zwischen nämlichem Teilbereich 112a und der ersten Oberfläche 111+ des Verformungskörpers 111 erstreckenden zweiten Teilbereich 112b nicht aufnimmt bzw. frei läßt. Darüberhinaus sind der Verformungskörper 111 und die Sensorfahne 112 dafür eingerichtet, in Ausübung der vorbezeichneten Schwingungen um die gemeinsame statische Ruhelage relativ zur Überlastschutzvorrichtung 113 bewegt zu werden, derart, daß einhergehend mit den dabei ausgeführten Pendelbewegungen der Sensorfahne 112 deren innerhalb des Zwischenraums 113' befindlicher Teilbereich 112a abwechselnd nach links, nämlich in Richtung hin zum ersten Anschlag 113b, bzw. nach rechts, nämlich in Richtung hin zum zweiten Anschlag 113c, bewegt wird. Die Überlastschutzvorrichtung 113 kann beispielsweise zumindest anteilig, insb. aber auch überwiegend oder vollständig, aus einem Metall, wie etwa einem Edelstahl bzw. einer Nickelbasislegierung, bestehen. Zudem kann es auch von Vorteil sein, Verformungskörper 111 und Überlastschutzvorrichtung 113, ggf. auch die Sensorfahne aus gleichem Material herzustellen. Desweiteren können die beiden Anschläge sowie der Stützbügel beispielsweise auch integrale Bestandteile ein und desselben monolithischen Formteils sein, beispielsweise auch derart, daß die gesamte Überlastschutzvorrichtung mittels eines einzigen monolithischen Formteils gebildet ist. Nämliches monolithisches Formteil kann beispielsweise ein gegossenes oder durch ein generatives Verfahren, wie z.B. 3D-Laserschmelzen, hergestelltes Formteil, insb. aus einem Metall, sein.

Der Verformungskörper 111 und die Überlastschutzvorrichtung 113 können aber beispielsweise aneinander gefügt, nämlich stoffschlüssig miteinander verbunden, insb. nämlich miteinander verschweißt bzw. verlötet, sein. Nicht zuletzt Zweck Vereinfachung eines solchen Zusammenfügens von Verformungskörper 111 und Überlastschutzvorrichtung 113 weist die Überlastschutzvorrichtung 113 nach einer weiteren Ausgestaltung der Erfindung an einem dem Randsegment 111a des Verformungskörpers 111 zugewandten Ende ein Verbindungelement 113d auf. Nämliches Verbindungelement 113d kann, wie u.a. auch aus einer Zusammenschau der Fig. 3a-d ohne weiteres ersichtlich, beispielsweise ringförmig ausgebildet sein. Zudem können das Verbindungelement 113d und das Randsegment 111a zueinander koaxial angeordnet sein. Nach einer weiteren Ausgestaltung der Erfindung sind das Verbindungelement 113d und das Randsegment 111a zudem stoffschlüssig miteinander verbunden, insb. nämlich miteinander verschweißt. Ebenso können auch der Stützbügel 113a und das Verbindungelement 113d stoffschlüssig miteinander verbunden, insb. nämlich miteinander verschweißt, sein; Verbindungelement 113d und Stützbügel 113a können aber beispielsweise auch integrale Bestandteile ein und desselben monolithischen Formteils sein.

Der Verformungskörper 111, die Sensorfahne 112 und die Überlastschutzvorrichtung 113 sind ferner so bemessen und so angeordnet, daß bei gemeinsam mit dem Verformungskörper in gemeinsamer statischer Ruhelage befindlicher Sensorfahne diese weder den Stützbügel, noch einen der Anschläge kontaktiert. Um sicherzustellen, daß zum einen die (gemeinsam mit dem Verformungskörper) in statischer Ruhelage befindliche Sensorfahne tatsächlich keinen der Anschläge kontaktiert und zum anderen die den Verformungskörper 111 elastisch verformende Pendelbewegungen der Sensorfahne 112 eine für die Erfassung der Druckschwankungen bzw. für die Ermittlung einer Ablöserate von periodische Druckschwankungen verursachenden Wirbeln dennoch ausreichende maximale Auslenkung aufweisen können, sind der Verformungskörper 111, die Sensorfahne 112 und die Überlastschutzvorrichtung 113 nach einer weiteren Ausgestaltung der Erfindung ferner so bemessen und angeordnet, daß zumindest bei in nämlicher statischer Ruhelage befindlicher Sensorfahne zwischen dieser und jedem der beiden Anschläge jeweils ein ausreichend großer Spalt gebildet ist, insb. derart, daß jeder der Spalte jeweils eine minimale Spaltbreite aufweist, die größer als 0,02 mm ist. Darüberhinaus ist ferner vorgesehen, daß Verformungskörper, Sensorfahne und Überlastschutzvorrichtung so bemessen und angeordnet sind, daß bei in nämlicher statischer Ruhelage befindlicher Sensorfahne zwischen dieser und dem Stützbügel ein ausreichend großer Spalt gebildet ist, insb. derart, daß der Spalt eine minimale Spaltbreite aufweist, die größer als 0,02 mm, insb. größer als 0,05 mm.

Zwecks Realisierung eines Schutzes des Verformungskörpers gegen plastische bzw. irreversible Deformation, etwa infolge asymmetrisch auf die Sensorfahne wirkender Druckschwankungen, bzw. eines Schutzes der mittels nämlichen Verformungskörpers gebildeten Sensorbaugruppe vor einer aus solchen Druckschwankungen resultierenden Zerstörung sind der Verformungskörper 111, die Sensorfahne 112 und die Überlastschutzvorrichtung 113 nach einer weiteren Ausgestaltung der Erfindung ferner so bemessen und angeordnet, daß bei gemeinsam mit dem Verformungskörper 111 in einer von der gemeinsamen statischen Ruhelage abweichenden gemeinsamen ersten Endlage befindlicher Sensorfahne diese den ersten Anschlag 113b kontaktiert, insb. den Stützbügel 113a aber nicht kontaktiert. Darüberhinaus sind der Verformungskörper 111, die Sensorfahne 112 und die Überlastschutzvorrichtung 113 nach einer weiteren Ausgestaltung der Erfindung zudem auch so bemessen und angeordnet, daß bei gemeinsam mit dem Verformungskörper in einer von der gemeinsamen statischen Ruhelage wie auch von der gemeinsamen ersten Endlage abweichenden gemeinsamen zweiten Endlage befindlicher Sensorfahne 112 diese den zweiten Anschlag 113c kontaktiert, insb. den Stützbügel 113a aber nicht kontaktiert. Im besonderen sind der Verformungskörper, die Sensorfahne und die Überlastschutzvorrichtung ferner so bemessen und angeordnet, daß sowohl eine mit der ersten Endlage korrespondierende Deformation des Verformungskörpers als auch eine mit der zweiten Endlage korrespondierende Deformation des Verformungskörpers elastisch, insb. linear-elastisch, ist, mithin die durch die Pendelbewegungen der Sensorfahne bewirkten Deformationen vollständig reversible sind. Dies kann für Sensorbaugruppen mit typischen Abmessungen bei der Sensorfahne und dem Verformungskörper beispielsweise dadurch ohne weiteres sichergestellt werden, indem der vorbezeichnete, bei in statischer Ruhelage befindlicher Sensorfahne zwischen dieser und dem Stützbügel gebildete Spalt zumindest in Detektionsrichtung gemessen kleiner als 0,2 mm gewählt ist. Nicht zuletzt zwecks Bildung eines ausreichen großen, nämlich die Ausbildung des vorbezeichneten Spaltes ermöglichenden Zwischenraums 113' ist der Stützbügel 113 nach einer weiteren Ausgestaltung der Erfindung ferner so ausgebildet, daß er eine Dicke d2, gemessen als eine maximale seitlich Erstreckung in Richtung der Detektionsrichtung, aufweist, die nicht kleiner ist als die vorbezeichnete Dicke d der Sensorfahne 112. Alternativ oder in Ergänzung kann der Stützbügel 113 auch so ausgebildet sein, daß zumindest ein die beiden Anschläge 113b, 113c tragender Teilabschnitt des Stützbügels 113 nämliche Dicke d2 aufweist und/oder daß nämlicher Teilabschnitt des Stützbügels 113 eine Dicke, gemessen als seitliche Erstreckung in Detektionsrichtung, aufweist, die kleiner als die Dicke d der Sensorfahne 112, gleichwohl größer als eine Dicke des vom Zwischenraum aufgenommenen Teilbereichs 112a der Sensorfahne 112, gemessen als dessen seitlich Erstreckung in Detektionsrichtung, ist. Des weiteren kann der Stützbügel 113a beispielsweise einen quadratischen Querschnitt aufweisen, derart, daß Breite b2 des Stützbügels 113a etwa so groß ist wie dessen Dicke d2 bzw. etwa auch in der Größenordnung der Dicke d der Sensorfahne 112 liegt; der Querschnitt kann aber beispielsweise auch rechteckförmig sein, mithin kann die Breite b2 des Stützbügels 113a auch etwas größer oder auch etwas kleiner gewählt sein als dessen Dicke d2 bzw. die Dicke d der Sensorfahne 112.

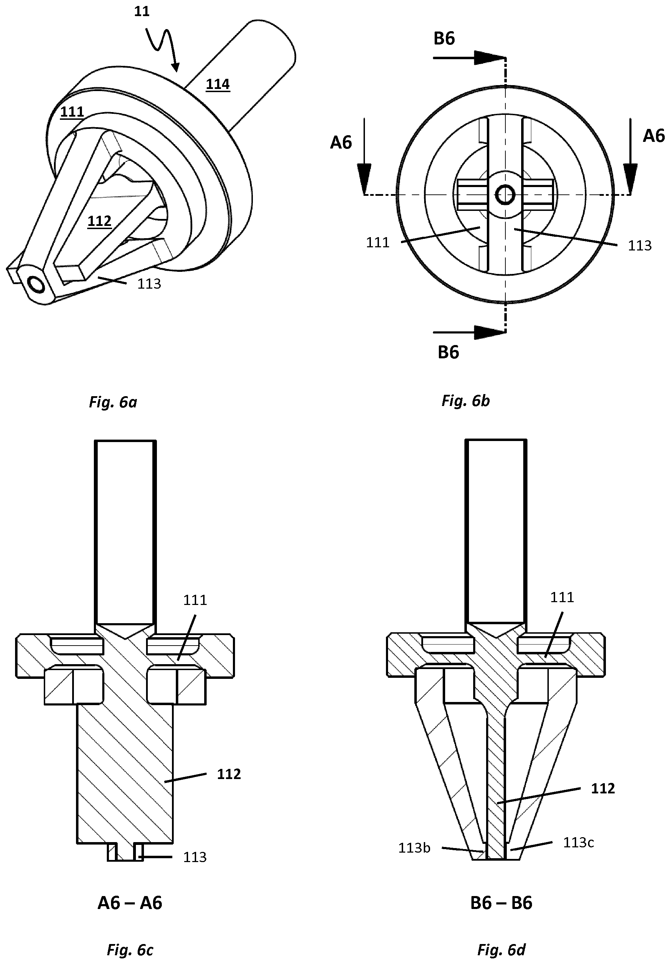

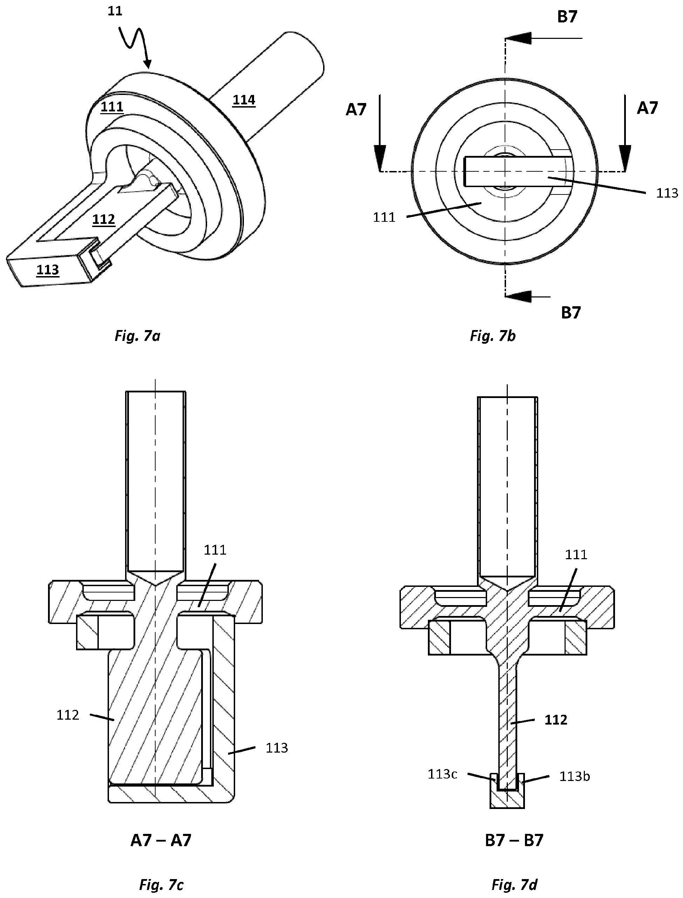

Nach einer Ausgestaltung der Erfindung ist der Stützbügel 113a zumindest teilweise rückseitig, hier nämlich in Hauptströmungsrichtung stromabwärts der Sensorfahne geführt. Alternativ oder in Ergänzung kann der Stützbügel zumindest teilweise auch frontseitig, hier nämlich in Hauptströmungsrichtung stromaufwärts der Sensorfahne geführt sein. Nach einer anderen Ausgestaltung der Erfindung ist die Überlastschutzvorrichtung 113 so ausgebildet und so angeordnet, daß der Stützbügel 113a zumindest teilweise linksseitig der Sensorfahne 112 geführt ist und/oder daß der Stützbügel 113a zumindest teilweise rechtsseitig der Sensorfahne 112 geführt ist. Der Stützbügel 113a bzw. die damit gebildete Überlastschutzvorrichtung 113 kann dementsprechend beispielsweise so ausgebildet sein, daß der Stützbügel 113a, wie etwa in den Fig. 3a-d, den Fig. 4a-d oder den Fig. 5a-d jeweils dargestellt bzw. aus einer Zusammenschau der Fig. 3a-d, 4a-d bzw. 5a-d jeweils ohne weiteres ersichtlich, eine im wesentlichen U-förmige Silhouette aufweist. Nicht zuletzt für den Fall, daß der Stützbügel 113a, daß der Stützbügel 113a sowohl linksseitig der Sensorfahne 112 als auch rechtsseitig der Sensorfahne 112 geführt ist kann der Stützbügel 113a beispielsweise auch, wie auch in den Fig. 6a-d dargestellt bzw. aus deren Zusammenschau ersichtlich, eine V-förmige Silhouette aufweisen. Für den anderen Fall, daß der Stützbügel 113a teilweise rückseitig oder teilweise frontseitig der Sensorfahne geführt ist, kann der Stützbügel, wie etwa in den Fig. 7a-d gezeigt, beispielsweise aber auch eine L-förmige Silhouette aufweisen.

Zwecks Bildung des vom Zwischenraum 113' der Überlastschutzvorrichtung 113 aufgenommenen Teilbereichs 112a der Sensorfahne 112 weist diese nach einer weiteren Ausgestaltung der Erfindung einen, insb. zylindrischen oder quaderförmigen, Fortsatz auf bzw. ist der Teilbereich 112a durch nämlichen Fortsatz gebildet. Zudem sind der Verformungskörper, die Sensorfahne und die Überlastschutzvorrichtung, wie auch aus einer Zusammenschau der Fig. 3a-d bzw. Fig. 5a-d oder 6a-d jeweils ersichtlich, so bemessen und angeordnet, daß nämlicher Fortsatz (112a ) in den zwischen den Anschlägen gebildeten Zwischenraum 113' hineinragt. Ein größter Durchmesser nämlichen Forsatzes kann beispielsweise so gewählt sein, daß er, wie auch aus einer Zusammenschau der Fig. 3a-d bzw. Fig. 5a-d oder 6a-d jeweils ersichtlich, etwa der Dicke d entspricht. Nämlicher Durchmesser kann aber beispielsweise auch kleiner gewählt sein als die vorbezeichneten Dicke d der Sensorfahne 112, beispielsweise auch so, daß die vorbezeichnete Dicke d2 des Stützbügels 113a ggf. sogar gleich oder kleiner als die Dicke der Sensorfahne gewählt sein kann.

Bei dieser Ausgestaltung der Erfindung können die beiden Anschläge 113b, 113c ferner durch Randsegmente einer im Stützbügel 113a vorgesehenen Ausnehmung und der Zwischenraum 113' durch ein von den Randsegmenten umschlossenes Lumen nämlicher Ausnehmung gebildet sein, derart, daß die Ausnehmung praktisch als ein Lager und der Fortsatz als ein das Lager mit ausreichendem, nämlich die vorbezeichneten Pendelbewegungen der Sensorfahne ermöglichendem Spiel aufnehmender Zapfen dienen bzw. daß Ausnehmung und Fortsatz eine Spielpassung, beispielsweise mit bezüglich des Passungssystems "Einheitsbohrung" (DIN EN ISO 286-2:2010) merklichem bis reichlichem Spiel, bilden. Die Ausnehmung kann beispielsweise eine im Stützbügel 113a vorgesehene Durchgangsöffnung oder Bohrung sein; die Ausnehmung kann aber beispielsweise auch als ein im Stützbügel angelegtes Langloch bzw. als ein im Stützbügel angelegtes Sackloch ausgebildet sein, von dem ein offenes Ende zwecks Aufnahme des Fortsatzes der Sensorfahne 112 entsprechend zugewandt ist. Nach einer anderen Ausgestaltung der Erfindung ist vorgesehen, daß die den Zwischenraum 113' bildende Ausnehmung, wie beispielsweise auch in den Fig. 4a-d bzw. Fig. 7a-d angedeutet, im wesentlichen nutförmig bzw. im wesentlichen rinnenförmig ausgebildet ist. Darüberhinaus können der Verformungskörper, die Sensorfahne und die Überlastschutzvorrichtung, wie auch aus einer Zusammenschau der Fig. 4a-d bzw. Fig. 7a-d jeweils ersichtlich, hierbei ferner so bemessen und angeordnet sein, daß sich die im Stützbügel 113a vorgesehene Ausnehmung bzw. die damit gebildeten Anschläge 113b, 113c und der damit gebildete Zwischenraum 113' jeweils im wesentlichen über die gesamte Breite b der Sensorfahne 112 erstrecken bzw. daß der vom Zwischenraum 113' aufgenommene Teilbereich 112a der Sensorfahne eine deren Breite b entsprechende Breite aufweist.

Zum Kompensieren von aus allfälligen Bewegungen der Sensorbaugruppe - etwa infolge von Vibration der vorbezeichneten, an das Rohr angeschlossenen Rohrleitung - resultierenden Kräften und/oder Momenten bzw. zum Vermeiden von daraus resultierenden unerwünschten, nämlich das Sensorsignal s1 verfälschenden Bewegungen der Sensorfahne bzw. des Verformungskörpers 111 weist die Sensorbaugruppe 11 nach einer weiteren Ausgestaltung der Erfindung ferner einen sich ausgehend von der zweiten Oberfläche 111# des Verformungskörpers 111 erstreckenden, beispielsweise stab-, platten- oder hülsenförmigen, Ausgleichskörper 114 auf. Nämlicher Ausgleichskörper 114 kann zudem auch als eine Halterung des Wandlerelements 12 dienen oder auch als ein Bestandteil des Wandlerelements 12 dienen, beispielsweise als eine bewegliche Elektrode eines nämliches (kapazitives) Wandlerelement bildenden Kondensators. Der Ausgleichskörper 114 kann beispielsweise aus dem gleichen Material bestehen, wie der Verformungskörper und/oder wie die Sensorfahne, beispielsweise einem Metall. Beispielsweise kann der Ausgleichskörper 114 nämlich aus einem Edelstahl bzw. einer Nickelbasislegierung hergestellt sein. Nach einer weiteren Ausgestaltung der Erfindung sind Verformungskörper 111 und Ausgleichskörper 114 stoffschlüssig miteinander verbunden, beispielsweise miteinander verschweißt bzw. verlötet, mithin ist vorgesehen, Ausgleichskörper 114 und Verformungskörper 111 aus entsprechend stoffschlüssig miteinander verbindbaren Materialien herzustellen. Alternativ können Verformungskörper 111 und Ausgleichskörper 114 aber auch Bestandteile ein und desselben monolithischen Formteils sein, beispielsweise auch derart, daß Sensorfahne 111, Verformungskörper 112 und Ausgleichskörper 114 Bestandteile nämlichen Formteils sind. Sensorfahne 112 und Ausgleichskörper 114 können desweiteren - wie auch aus einer Zusammenschau der Fig. 3c und 3d ersichtlich - zueinander fluchtend angeordnet sein, derart, daß eine Trägheitshauptachse der Sensorfahne 112 in Verlängerung mit einer Trägheitshauptachse des Ausgleichskörpers 114 koinzidiert. Alternativ oder in Ergänzung können der Ausgleichskörper 114 und der Verformungskörper 111 zudem so positioniert und zueinander ausgerichtet sein, daß eine Trägheitshauptachse des Verformungskörpers 111 in Verlängerung mit einer Trägheitshauptachse des Ausgleichskörpers 114 koinzidiert. Darüberhinaus können Sensorfahne 112, Ausgleichskörper 114 und Verformungskörper 111 auch so positioniert und zueinander ausgerichtet sein, daß - wie beispielsweise auch aus einer Zusammenschau der Fig. 2, 3a, 3b, 3c und 3d ersichtlich - eine Trägheitshauptachse der Sensorbaugruppe 11 sowohl zu einer Trägheitshauptachse der Sensorfahne 112 als auch einer Trägheitshauptachse des Ausgleichskörpers 114 wie auch einer Trägheitshauptachse des Verformungskörpers 111 parallel verläuft oder sowohl mit nämlicher Trägheitshauptachse der Sensorfahne als auch mit nämlicher Trägheitshauptachse Ausgleichskörpers wie auch mit nämlicher Trägheitshauptachse des Verformungskörpers koinzidiert.

## Patentansprüche

1. Meßsystem zum Messen wenigstens eines, insb. zeitlich veränderlichen, Strömungsparameters, insb. einer Strömungsgeschwindigkeit und/oder einer Volumendurchflußrate, eines in einer Rohrleitung strömenden Fluids, welches Meßsystem umfaßt:
- ein in den Verlauf nämlicher Rohrleitung einsetzbares Rohr (3) mit einem Lumen (3'), das dafür eingerichtet ist, das in der Rohrleitung strömende Fluid zu führen;
- einen im Lumen des Rohrs (3) angeordneten Stauköper (4), der dafür eingerichtet ist, im strömendem Fluid eine Kärmänsche Wirbelstrasse zu bewirken;
- einen Sensor zum Erfassen von Druckschwankungen in einem strömenden Fluid, insb. zum Erfassen von Druckschwankungen in einer im strömenden Fluid ausgebildeten *Kármánschen* Wirbelstrasse,
-- welcher Sensor eine Sensorbaugruppe
--- mit einem, insb. membranartigen und/oder scheibenförmigen, Verformungskörper (111) mit einer ersten Oberfläche (111+), einer gegenüberliegenden, insb. zur ersten Oberfläche (111+) zumindest teilweise parallelen, zweiten Oberfläche (111#) und einem, insb. kreisringförmigen und/oder mit einer Dichtfläche versehenen, äußeren Randsegment (111a),
--- mit einer sich ausgehend von der ersten Oberfläche (111+) des Verformungskörpers bis zu einem distalen Ende erstreckende, insb. plattenförmige oder keilförmige, Sensorfahne (112) mit einer linksseitigen ersten Seitenfläche (112+) und einer rechtsseitigen zweiten Seitenfläche (112#),
--- und mit einer sich ausgehend von dem Randsegment (111a) des Verformungskörpers (111) bis zu einem distalen Ende erstreckende, dem Schutz des Verformungskörpers (111) gegen plastische bzw. irreversible Deformation dienliche Überlastschutzvorrichtung (113) mit einem im seitlichen Abstand zur Sensorfahne geführten Stützbügel (113a) sowie zwei vom Stützbügel gehalterten Anschläge (113b, 113c) für die Sensorfahne (112), von denen ein erster Anschlag (113b) linksseitig der Sensorfahne und ein zweiter Anschlag (113c) rechtsseitig der Sensorfahne plaziert sind, aufweist,
-- und welcher Sensor ein Wandlerelement (12) zum Generieren eines zeitlich ändernde, insb. zumindest zeitweise periodische, Bewegungen der Sensorfahne und/oder zeitlich ändernde, insb. zumindest zeitweise periodische, Verformungen des Verformungskörper (111) repräsentierenden, insb. elektrischen oder optischen, Sensorsignals aufweist;
- sowie eine Meß-Elektronik (2), die dafür eingerichtet ist, das Sensorsignal zu empfangen und zu verarbeiten, insb. nämlich den wenigstens einen Strömungsparameter repräsentierende Meßwerte (X_{M}) zu generieren;
- wobei der Verformungskörper (111) und die Sensorfahne (112) dafür eingerichtet sind, zu, insb. erzwungenen, Schwingungen um eine gemeinsame statischen Ruhelage angeregt und dabei relativ zur Überlastschutzvorrichtung (113) bewegt zu werden, derart, daß die Sensorfahne den Verformungskörper elastisch verformende Pendelbewegungen ausführt, bei denen der innerhalb des Zwischenraums (113') befindliche Teilbereich (112a) der Sensorfahne (112) abwechselnd nach links, nämlich in Richtung hin zum ersten Anschlag (113b), bzw. nach rechts, nämlich in Richtung hin zum zweiten Anschlag (113c), bewegt wird;
- wobei die Anschläge (113b, 113c) so bemessen und angeordnet sind, daß ein dazwischen gebildeter Zwischenraum (113') lediglich einen, insb. randständigen, Teilbereich (112a) der Sensorfahne (112) aufnimmt,
- und wobei Verformungskörper, Sensorfahne und Überlastschutzvorrichtung so bemessen und angeordnet sind,
-- daß bei gemeinsam mit dem Verformungskörper in einer von der gemeinsamen statischen Ruhelage abweichenden gemeinsamen ersten Endlage befindlicher Sensorfahne diese den ersten Anschlag kontaktiert, insb. den Stützbügel aber nicht kontaktiert,
-- daß bei gemeinsam mit dem Verformungskörper in einer von der gemeinsamen statischen Ruhelage wie auch von der gemeinsamen ersten Endlage abweichenden gemeinsamen zweiten Endlage befindlicher Sensorfahne diese den zweiten Anschlag kontaktiert, insb. den Stützbügel aber nicht kontaktiert,
-- und daß sowohl eine mit der ersten Endlage korrespondierende Deformation des Verformungskörpers als auch eine mit der zweiten Endlage korrespondierende Deformation des Verformungskörpers elastisch, insb. linear-elastisch, ist;
- wobei die Sensorfahne (112) eine Länge, gemessen als minimaler Abstand zwischen einem proximalen, nämlich an den Verformungskörper (111) grenzenden Ende der Sensorfahne (112) bis zu einem distalen, nämlich vom Verformungskörper (111) bzw. dessen Oberfläche (111+) entfernten Ende der Sensorfahne (112) aufweist, welche Länge weniger als 95% eines Kalibers (DN) des Rohrs (3) entspricht,
- und wobei die Überlastschutzvorrichtung eine Länge, gemessen als minimaler Abstand zwischen einem proximalen, nämlich an den Verformungskörper (111) grenzenden Ende der Überlastschutzvorrichtung bis zu einem distalen, nämlich vom Verformungskörper (111) bzw. dessen Oberfläche (111+) entfernten Ende der Überlastschutzvorrichtung aufweist, welche Länge weniger als 95% des Kalibers (DN) des Rohrs (3) entspricht;
- wobei das äußere Randsegment (111a) des Verformungskörpers (111) dafür eingerichtet ist, mit einer dem Haltern des Verformungskörpers an einer Wandung des Rohrs dienenden Fassung (3a), insb. stoffschlüssige und/oder hermetisch dicht, verbunden zu werden, insb. derart, daß der Verformungskörper eine in der Wandung des Rohrs vorgesehene Öffnung überdeckt, insb. nämlich hermetisch verschließt, und/oder derart, daß die erste Oberfläche des Verformungskörpers einem Lumen des Rohrs zugewandt ist, mithin die Sensorfahne in nämliches Lumen hineinragt;
- und wobei der Sensor (1) in das Rohr eingesetzt ist, derart, daß die erste Oberfläche des Verformungskörpers (111) dem Lumen (3') des Rohrs zugewandt ist und daß die Sensorfahne in nämliches Lumen hineinragt.

2. Meßsystem nach einem der vorherigen Ansprüche, wobei die Überlastschutzvorrichtung (113) an einem dem Randsegment (111a) des Verformungskörpers (111) zugewandten Ende ein, insb. ringförmiges, Verbindungelement (113d) aufweist.

3. Meßsystem nach Anspruch 2, wobei das Verbindungelement (113d) sowie der Stützbügel (113a) integrale Bestandteile ein und desselben monolithischen Formteils sind.

4. Meßsystem nach Anspruch 2, Stützbügel (113a) und Verbindungelement (113d), insb. stoffschlüssig, miteinander verbunden, insb. nämlich miteinander verschweißt, sind.

5. Meßsystem nach einem der Ansprüche 2 bis 4, wobei das Verbindungelement (113d) der Überlastschutzvorrichtung (113) und das Randsegment (111a) des Verformungskörpers (111), insb. stoffschlüssig, miteinander verbunden, insb. nämlich miteinander verschweißt, sind.

6. Meßsystem nach einem der vorherigen Ansprüche,
- wobei Verformungskörper, Sensorfahne und Überlastschutzvorrichtung so bemessen und angeordnet sind, daß bei gemeinsam mit dem Verformungskörper in gemeinsamer statischer Ruhelage befindlicher Sensorfahne diese weder den Stützbügel, noch einen der Anschläge kontaktiert; und/oder
- wobei Verformungskörper, Sensorfahne und Überlastschutzvorrichtung so bemessen und angeordnet sind, daß bei gemeinsam mit dem Verformungskörper in gemeinsamer statischer Ruhelage befindlicher Sensorfahne zwischen der Sensorfahne und jedem der beiden Anschläge jeweils ein Spalt gebildet ist, insb. derart, daß jeder der Spalt jeweils eine minimale Spaltbreite aufweist, die größer als 0,02 mm und/oder kleiner als 0,2 mm ist, und/oder daß die Sensorfahne keinen der Anschläge kontaktiert; und/oder
- wobei Verformungskörper, Sensorfahne und Überlastschutzvorrichtung so bemessen und angeordnet sind, daß bei gemeinsam mit dem Verformungskörper in gemeinsamer statischer Ruhelage befindlicher Sensorfahne zwischen der Sensorfahne und dem Stützbügel ein Spalt gebildet ist, insb. derart, daß der Spalt eine minimale Spaltbreite aufweist, die größer als 0,02 mm und/oder daß die Sensorfahne den Stützbügel nicht kontaktiert.

7. Meßsystem nach einem der vorherigen Ansprüche,
- wobei die Sensorfahne einen, insb. endständigen und/oder stiftförmigen, Fortsatz aufweist,
- und wobei Verformungskörper, Sensorfahne und Überlastschutzvorrichtung so bemessen und angeordnet sind, daß nämlicher Fortsatz in den zwischen den Anschlägen gebildeten Zwischenraum hineinragt.

8. Meßsystem nach dem vorherigen Anspruch, wobei die Anschläge durch Randsegmente einer im Stützbügel vorgesehenen, insb. als Durchgangsöffnung oder als Bohrung ausgebildeten, Ausnehmung und der Zwischenraum durch ein von den Randsegmenten umschlossenes Lumen nämlicher Ausnehmung gebildet sind.

9. Meßsystem nach einem der vorherigen Ansprüche,
- wobei Verformungskörper und Überlastschutzvorrichtung stoffschlüssig miteinander verbunden, insb. nämlich miteinander verschweißt bzw. verlötet, sind; und/oder
- wobei Verformungskörper und Sensorfahne stoffschlüssig miteinander verbunden, insb. nämlich miteinander verschweißt bzw. verlötet, sind; und/oder
- wobei die Überlastschutzvorrichtung zumindest anteilig, insb. überwiegend oder vollständig, aus einem Metall, insb. einem Edelstahl bzw. einer Nickelbasislegierung, besteht; und/oder
- wobei Verformungskörper und Überlastschutzvorrichtung aus einem gleichen Material bestehen; und/oder
- wobei Verformungskörper und Überlastschutzvorrichtung Bestandteile ein und desselben, insb. gegossenen oder durch 3D-Laserschmelzen hergestellten, monolithischen Formteils sind; und/oder
- wobei der Verformungskörper zumindest anteilig, insb. überwiegend oder vollständig, aus einem Metall, insb. einem Edelstahl bzw. einer Nickelbasislegierung, besteht; und/oder
- wobei die Sensorfahne zumindest anteilig, insb. überwiegend oder vollständig, aus einem Metall, insb. einem Edelstahl bzw. einer Nickelbasislegierung, besteht; und/oder
- wobei Verformungskörper und Sensorfahne aus einem gleichen Material bestehen; und/oder
- wobei Verformungskörper und Sensorfahne Bestandteile ein und desselben, insb. gegossenen oder durch 3D-Laserschmelzen hergestellten, monolithischen Formteils sind.

10. Meßsystem nach einem der vorherigen Ansprüche,
- wobei der Stützbügel zumindest teilweise linksseitig der Sensorfahne geführt ist; und/oder
- wobei der Stützbügel zumindest teilweise rechtsseitig der Sensorfahne geführt ist; und/oder
- wobei der Stützbügel zumindest teilweise frontseitig der Sensorfahne geführt ist; und/oder
- wobei der Stützbügel zumindest teilweise rückseitig der Sensorfahne geführt ist; und/oder
- wobei die Überlastschutzvorrichtung mittels eines einzigen monolithischen Formteils gebildet ist; und/oder
- wobei der erste Anschlag, der zweite Anschlag sowie der Stützbügel integrale Bestandteile ein und desselben monolithischen Formteils sind; und/oder
- wobei die Anschläge zumindest teilweise durch Randsegmente einer im Stützbügel vorgesehenen Ausnehmung gebildet sind; und/oder
- wobei der Zwischenraum zumindest teilweise durch ein Lumen einer im Stützbügel vorgesehenen Ausnehmung gebildet ist; und/oder
- wobei in dem äußeren Randsegment (111a) wenigstens eine, insb. umlaufende und/oder kreisringartige, Dichtfläche ausgebildet ist.

11. Meßsystem nach einem der vorherigen Ansprüche, wobei der Stützbügel eine U-förmige Silhouette aufweist.

12. Meßsystemnach einem der Ansprüche 1 bis 10, wobei der Stützbügel eine V-förmige Silhouette aufweist.

13. Meßsystem nach einem der Ansprüche 1 bis 10, wobei der Stützbügel eine L-förmige Silhouette aufweist.

14. Meßsystem nach einem der vorherigen Ansprüche,
- wobei in der Wandung des Rohrs (3) eine, insb. eine dem Haltern des Verformungskörpers (111) an der Wandung dienende Fassung (3a) aufweisende, Öffnung (3") ausgebildet ist,
- und wobei der Sensor (1) in nämliche Öffnung (3") eingesetzt ist, derart, daß der Verformungskörper (111) die Öffnung (20') überdeckt, insb. nämlich hermetisch verschließt, und daß die erste Oberfläche des Verformungskörpers (111) dem Lumen (3') des Rohrs zugewandt ist, mithin die Sensorfahne in nämliches Lumen hineinragt.

15. Meßsystem nach dem vorherigen Anspruch, wobei die Öffnung (3") eine dem Haltern des Verformungskörpers (111) an der Wandung dienende Fassung (3a) aufweist.

16. Meßsystem nach dem vorherigen Anspruch, wobei in der Fassung (3a) wenigstens eine, insb. umlaufende und/oder kreisringartige, Dichtfläche ausgebildet ist.

17. Meßsystem nach dem vorherigen Anspruch,
- wobei in dem Randsegment wenigstens eine, insb. umlaufende und/oder kreisringartige, Dichtfläche ausgebildet ist, und
- wobei nämliche Dichtfläche und die Dichtfläche der Fassung für ein hermetisches Verschließen der Öffnung, insb. auch unter Zwischenlage wenigstens einer Dichtung, eingerichtet sind.

18. Meßsystem nach einem der vorherigen Ansprüche,
- wobei die Länge der Sensorfahne (112) mehr als einer Hälfte nämlichen Kalibers (DN) entspricht; und/oder
- wobei die Länge der Überlastschutzvorrichtung mehr als einer Hälfte nämlichen Kalibers (DN) entspricht; und/oder
- wobei der Sensor (1) dafür ausgestaltet ist, Druckschwankungen im in einer Hauptströmungsrichtung am Sensor vorbei strömenden Fluid zu erfassen und wobei der Stützbügel zumindest teilweise frontseitig, nämlich in Hauptströmungsrichtung stromaufwärts der Sensorfahne und/oder zumindest teilweise rückseitig, nämlich in Hauptströmungsrichtung stromabwärts der Sensorfahne geführt ist.

19. Verwenden eines Meßsystems nach einem der vorherigen Ansprüche zum Messen eines Strömungsparameters - insb. nämlich einer Strömungsgeschwindigkeit und/oder einer Volumendurchflußrate und/oder einer Massendurchflußrate - eines in einer Rohrleitung strömenden, insb. zumindest zeitweise eine Temperatur von mehr als 400°C und/oder zumindest zeitweise mit einem Druck von mehr als 140 bar auf den Verformungskörper und/oder die Sensorfahne des Sensors wirkenden, Fluids, insb. einem Dampf.

## Claims

1. A measuring system for measuring at least one, in particular time-variable, flow parameter, in particular a flow velocity and/or a volumetric flow rate, of a fluid flowing in a pipeline, said measuring system comprising:
- a tube (3) which can be inserted into the course of said pipeline with a lumen (3') which is configured to conduct the fluid flowing in the pipeline;
- a damming body (4) arranged in the lumen of the tube (3), which is configured to cause a *Kármán* vortex street in the flowing fluid;
- a sensor for detecting pressure fluctuations in a flowing fluid, in particular for detecting pressure fluctuations in a *Kármán* vortex street formed in the flowing fluid,
-- said sensor having a sensor assembly
--- with an, in particular membrane-like and/or disk-shaped, deformation body (111) with a first surface (111+), an opposite second surface (111#), in particular at least partially parallel to the first surface (111+), and an outer edge segment (111a), in particular an annular one and/or one with a sealing surface,
--- with an, in particular plate-shaped or wedge-shaped, sensor flag (112), extending from the first surface (111+) of the deformation body to a distal end, with a first lateral surface (112+) on the left-hand side and a second lateral surface (112#) on the right-hand side,
--- and with an overload protection device (113) extending from the edge segment (111a) of the deformation body (111) to a distal end, serving to protect the deformation body (111) against plastic or irreversible deformation, with a support bracket (113a) guided at a distance from the side of the sensor flag and two limit stops (113b, 113c) held in place by the support bracket for the sensor flag (112), of which a first limit stop (113b) is positioned on the left-hand side of the sensor flag and a second limit stop (113c) is positioned on the right-hand side of the sensor flag,
-- and said sensor having a converter element (12) for generating an, in particular electrical or optical, sensor signal representing, in particular at least occasionally periodic, movements of the sensor flag and/or time-variable, in particular at least occasionally periodic, deformations of the deformation body (111);
- and measuring electronics (2) which are configured to receive and process the sensor signal, that is to say, in particular, to generate measured values (X_{M}) representing the at least one flow parameter;
- wherein the deformation body (111) and the sensor flag (112) are configured to carry out, in particular forced, oscillations around a shared static resting position and in the process to be moved relative to the overload protection device (113) in such a way that the sensor flag carries out pendulum movements which elastically deform the deformation body, during which the partial area (112a) of the sensor flag (112) inside the space (113') is moved alternately to the left, that is to say toward the first limit stop (113b), and to the right, that is to say toward the second limit stop (113c);
- wherein the limit stops (113b, 113c) are measured and arranged so that a space (113') formed in between only houses an, in particular peripheral, partial area (112a) of the sensor flag (112),
- and wherein the deformation body, sensor flag and overload protection device are measured and arranged in such a way that
-- when the sensor flag is located in a shared first end position together with the deformation body that differs from the shared static resting position, it is in contact with the first limit stop, but in particular is not in contact with the support bracket,
-- when the sensor flag is located in a shared second end position together with the deformation body that differs from the shared static resting position as well as from the shared first end position, it is in contact with the second limit stop, but in particular is not in contact with the support bracket,
-- and in such a way that both a deformation of the deformation body corresponding to the first end position and a deformation of the deformation body corresponding to the second end position are elastic, in particular linear-elastic;
- wherein the sensor flag (112) has a length, measured as the minimum distance between a proximal end of the sensor flag (112), that is to say adjacent to the deformation body (111), to a distal end of the sensor flag (112), that is to say at a distance from the deformation body (111) or its surface (111+), said length being equal to less than 95% of a caliber (DN) of the tube (3),
- and wherein the overload protection device has a length, measured as the minimum distance between a proximal end of the overload protection device, that is to say adjacent to the deformation body (111), to a distal end of the overload protection device, that is to say at a distance from the deformation body (111) or its surface (111+), said length being equal to less than 95% of the caliber (DN) of the tube (3);
- wherein the outer edge segment (111a) of the deformation body (111) is configured to be connected to a mount (3a) serving to hold the deformation body on a wall of the tube, in particular by means of permanent material bond and/or a hermetically sealed connection, in particular in such a way that the deformation body covers an opening provided in the wall of the tube, that is to say, in particular, hermetically seals it, and/or in such a way that the first surface of the deformation body faces toward a lumen of the tube, and therefore the sensor flag protrudes into said lumen;
- and wherein the sensor (1) is inserted into the tube in such a way that the first surface of the deformation body (111) faces toward the lumen (3') of the tube and in such a way that the sensor flag protrudes into said lumen.

2. The measuring system as claimed in one of the preceding claims, wherein the overload protection device (113) has an, in particular annular, connecting element (113d) at an end facing toward the edge segment (111a) of the deformation body (111).

3. The measuring system as claimed in claim 2, wherein the connecting element (113d) and the support bracket (113a) are integral components of one and the same monolithic molded part.

4. The measuring system as claimed in claim 2, wherein the support bracket (113a) and connecting element (113d) are connected together, in particular by means of a permanent material bond, that is to say, in particular, are welded together.

5. The measuring system as claimed in one of claims 2 to 4, wherein the connecting element (113d) of the overload protection device (113) and the edge segment (111a) of the deformation body (111) are connected together, in particular by means of a permanent material bond, that is to say, in particular, are welded together.

6. The measuring system as claimed in one of the preceding claims,
- wherein the deformation body, sensor flag and overload protection device are measured and arranged in such a way that, when the sensor flag is located in a shared static resting position together with the deformation body, it is in contact neither with the support bracket nor any of the limit stops; and/or
- wherein the deformation body, sensor flag and overload protection device are measured and arranged in such a way that, when the sensor flag is located in a shared static resting position together with the deformation body, a gap is formed between the sensor flag and each of the limit stops, in particular in such a way that each gap has a minimum gap width that is greater than 0.02 mm in each case and/or less than 0.2 mm, and/or that the sensor flag is not in contact with any of the limit stops; and/or
- wherein the deformation body, sensor flag and overload protection device are measured and arranged in such a way that, when the sensor flag is located in a shared static resting position together with the deformation body, a gap is formed between the sensor flag and the support bracket, in particular in such a way that the gap has a minimum gap width that is greater than 0.02 mm and/or that the sensor flag is not in contact with the support bracket.

7. The measuring system as claimed in one of the preceding claims,
- wherein the sensor flag has an, in particular terminal and/or pin-shaped, extension,
- and wherein the deformation body, sensor flag and overload protection device are measured and arranged in such a way that said extension protrudes into a space formed between the limit stops.

8. The measuring system as claimed in the preceding claim, wherein the limit stops are formed by edge segments of a recess provided in the support bracket, in particular formed as a passthrough opening or a drill hole, and the space is formed by a lumen of said recess surrounded by the edge segments.

9. The measuring system as claimed in one of the preceding claims,
- wherein the deformation body and overload protection device have a permanent material bond with each other, that is to say, in particular, are welded or soldered together; and/or
- wherein the deformation body and sensor flag have a permanent material bond with each other, that is to say, in particular, are welded or soldered together; and/or
- wherein the overload protection device is produced at least partially, in particular predominantly or completely, from a metal, in particular a stainless steel or a nickel-based alloy; and/or
- wherein the deformation body and overload protection device are made from the same material; and/or
- wherein the deformation body and overload protection device are components of one and the same monolithic molded part, in particular cast or produced by 3D laser melting; and/or
- wherein the deformation body is produced at least partially, in particular predominantly or completely, from a metal, in particular a stainless steel or a nickel-based alloy; and/or
- wherein the sensor flag is produced at least partially, in particular predominantly or completely, from a metal, in particular a stainless steel or a nickel-based alloy; and/or
- wherein the deformation body and sensor flag are made from the same material; and/or
- wherein the deformation body and sensor flag are components of one and the same monolithic molded part, in particular cast or produced by 3D laser melting.

10. The measuring system as claimed in one of the preceding claims,
- wherein the support bracket is guided at least partially on the left-hand side of the sensor flag; and/or
- wherein the support bracket is guided at least partially on the right-hand side of the sensor flag; and/or
- wherein the support bracket is guided at least partially at the front of the sensor flag; and/or
- wherein the support bracket is guided at least partially at the rear of the sensor flag; and/or
- wherein the overload protection device is formed by means of a single monolithic molded part; and/or
- wherein the first limit stop, the second limit stop and the support bracket are integral components of one and the same monolithic molded part; and/or
- wherein the limit stops are formed at least partially by edge segments of a recess provided in the support bracket; and/or
- wherein the space is formed at least partially by a lumen of a recess provided in the support bracket; and/or
- wherein at least one, in particular circumferential and/or annular, sealing surface is formed in the outer edge segment (111a).

11. The measuring system as claimed in one of the preceding claims, wherein the support bracket has a U-shaped silhouette.

12. The measuring system as claimed in one of claims 1 to 10, wherein the support bracket has a V-shaped silhouette.

13. The measuring system as claimed in one of claims 1 to 10, wherein the support bracket has an L-shaped silhouette.

14. The measuring system as claimed in one of the preceding claims,
- wherein an opening (3") is formed in the wall of the tube (3), in particular having a mount (3a) serving to hold the deformation body (111) on the wall,
- and wherein the sensor (1) is inserted into said opening (3") in such a way that the deformation body (111) covers the opening (20'), that is to say, in particular, hermetically seals it, and in such a way that the first surface of the deformation body (111) faces toward the lumen (3') of the tube, and therefore the sensor flag protrudes into said lumen.

15. The measuring system as claimed in the preceding claim, wherein the opening (3") has a mount (3a) serving to hold deformation body (111) on the wall.

16. The measuring system as claimed in the preceding claim, wherein at least one, in particular circumferential and/or annular, sealing surface is formed in the mount (3a).

17. The measuring system as claimed in the preceding claim,
- wherein at least one, in particular circumferential and/or annular, sealing surface is formed in the edge segment, and
- wherein said sealing surface and the sealing surface of the mount are configured to hermetically seal the opening, in particular also inserting at least one seal.

18. The measuring system as claimed in one of the preceding claims,
- wherein the length of the sensor flag (112) is equal to more than half of said caliber (DN); and/or
- wherein the length of the overload protection device is equal to more than half of said caliber (DN); and/or
- wherein the sensor (1) is configured to detect pressure fluctuations in a fluid flowing past the sensor in a main flow direction, and wherein the support bracket is guided at least partially at the front, that is to say upstream of the sensor flag in the main flow direction, and/or at least partially at the rear, that is to say downstream of the sensor flag in the main flow direction.

19. The use of a measuring system as claimed in one of the preceding claims for measuring a flow parameter - that is to say, in particular, a flow velocity and/or a volumetric flow rate and/or a mass flow rate - of a fluid flowing in a pipeline, in particular a vapor, in particular impacting the deformation body and/or the sensor flag of the sensor at least occasionally at a temperature of more than 400 °C and/or at least occasionally at a pressure of more than 140 bar.

## Revendications

1. Système de mesure destiné à mesurer au moins un paramètre d'écoulement, notamment variable dans le temps, notamment une vitesse d'écoulement et/ou un débit volumique, d'un fluide s'écoulant dans une conduite, lequel système de mesure comprend :
- un tube (3) pouvant être inséré dans le tracé de ladite conduite, avec un canal intérieur (3'), lequel canal est conçu pour guider le fluide s'écoulant dans la conduite ;
- un corps de retenue (4) disposé dans le canal intérieur du tube (3), lequel corps est conçu pour provoquer une allée de tourbillons selon Karman formée dans le fluide en écoulement ;
- un capteur destiné à mesurer les variations de pression dans un fluide en écoulement, notamment pour mesurer les variations de pression dans une allée de tourbillons selon Karman formée dans le fluide en écoulement,
-- lequel capteur comprend un module capteur
--- avec un corps déformable (111), notamment en forme de membrane et/ou en forme de disque, lequel corps comprend une première surface (111+), une deuxième surface opposée (111#), notamment au moins partiellement parallèle à la première surface (111+), et un segment de bord extérieur (111a), notamment de forme circulaire et/ou muni d'une surface d'étanchéité,
--- avec une languette de capteur (112) s'étendant à partir de la première surface (111+) du corps déformable jusqu'à une extrémité distale, notamment en forme de plaque ou de coin, laquelle languette présente une première surface latérale côté gauche (112+) et une deuxième surface latérale côté droit (112#),
--- et avec un dispositif de protection contre les surcharges (113) s'étendant à partir du segment de bord (111a) du corps déformable (111) jusqu'à une extrémité distale, lequel dispositif sert à protéger le corps déformable (111) contre une déformation plastique ou irréversible, lequel dispositif comprend un étrier de support (113a) guidé à une distance latérale de la languette de capteur, ainsi que deux butées (113b, 113c) maintenues par l'étrier de support pour la languette de capteur (112), butées parmi lesquelles une première butée (113b) est placée à gauche de la languette de capteur et une deuxième butée (113c) est placée à droite de la languette de capteur,
-- et lequel capteur comporte un élément transducteur (12) destiné à générer un signal de capteur, notamment électrique ou optique, lequel signal représente des mouvements de la languette de capteur qui varient dans le temps, notamment au moins temporairement périodiques, et/ou des déformations du corps déformable (111) qui varient dans le temps, notamment au moins temporairement périodiques ;
- ainsi qu'une électronique de mesure (2), laquelle est conçue pour recevoir et traiter le signal de capteur, notamment pour générer les valeurs mesurées (X_{M}) représentant l'au moins un paramètre d'écoulement ;
- le corps déformable (111) et la languette de capteur (112) étant conçus pour être excités en vibrations, notamment forcées, autour d'une position de repos statique commune, et déplacés par rapport au dispositif de protection contre les surcharges (113), de telle sorte que la languette de capteur effectue des mouvements pendulaires déformant élastiquement le corps déformable, mouvements au cours desquels la zone partielle (112a) de la languette de capteur (112) située dans l'espace intermédiaire (113') est déplacée alternativement vers la gauche, c'est-à-dire vers la première butée (113b), ou vers la droite, c'est-à-dire vers la deuxième butée (113c) ;
- les butées (113b, 113c) étant dimensionnées et disposées de telle sorte que l'espace intermédiaire (113') formé entre lesdites butées ne contienne qu'une zone partielle (112a), notamment marginale, de la languette de capteur (112),
- et le corps déformable, la languette de capteur et le dispositif de protection contre les surcharges étant dimensionnés et disposés de telle sorte
-- que, lorsque la languette de capteur se trouve avec le corps déformable dans une première position finale commune s'écartant de la position statique commune de repos, ladite languette entre en contact avec la première butée, mais n'entre pas en contact avec l'étrier de support,
-- que, lorsque la languette de capteur se trouve, conjointement avec le corps déformable, dans une deuxième position finale commune s'écartant de la position statique commune de repos ainsi que de la première position finale commune, ladite languette entre en contact avec la deuxième butée, mais n'entre pas en contact avec l'étrier de support,
-- et qu'une déformation du corps déformable correspondant à la première position finale ainsi qu'une déformation du corps déformable correspondant à la deuxième position finale sont élastiques, notamment linéairement élastiques ;
- la languette de capteur (112) présentant une longueur, mesurée comme distance minimale entre une extrémité proximale, à savoir adjacente au corps déformable (111), de la languette de capteur (112) et une extrémité distale, à savoir éloignée du corps déformable (111) ou de sa surface (111+), de la languette de capteur (112), laquelle longueur correspond à moins de 95 % d'un calibre (DN) du tube (3),
- et le dispositif de protection contre les surcharges présentant une longueur, mesurée comme distance minimale entre une extrémité proximale, c'est-à-dire adjacente au corps déformable (111), du dispositif de protection contre les surcharges et une extrémité distale, c'est-à-dire éloignée du corps déformable (111) ou de sa surface (111+) du dispositif de protection contre les surcharges, laquelle longueur correspond à moins de 95 % du calibre (DN) du tube (3) ;
- le segment de bord extérieur (111a) du corps déformable (111) étant conçu pour être relié à un logement (3a) servant à maintenir le corps déformable sur une paroi du tube, notamment par liaison de matière et/ou de manière hermétique, notamment de telle sorte que le corps déformable recouvre une ouverture prévue dans la paroi du tube, notamment la ferme hermétiquement, et/ou de telle sorte que la première surface du corps déformable soit tournée vers un canal intérieur du tube, de sorte que la languette de capteur pénètre dans ledit canal intérieur ;
- et le capteur (1) étant inséré dans le tube de telle sorte que la première surface du corps déformable (111) soit tournée vers le canal intérieur (3') du tube et que la languette de capteur pénètre dans ledit canal intérieur.

2. Système de mesure selon la revendication précédente, pour lequel le dispositif de protection contre les surcharges (113) comporte, à une extrémité tournée vers le segment de bord (111a) du corps déformable (111), un élément de liaison (113d), notamment de forme annulaire.

3. Système de mesure selon la revendication 2, pour lequel l'élément de liaison (113d) et l'étrier de support (113a) sont des parties intégrantes d'une seule et même pièce moulée monolithique.

4. Système de mesure selon la revendication 2, pour lequel l'étrier de support (113a) et l'élément de liaison (113d) sont reliés entre eux, notamment par liaison de matière, notamment à savoir par soudage.

5. Système de mesure selon l'une des revendications 2 à 4, pour lequel l'élément de liaison (113d) du dispositif de protection contre les surcharges (113) et le segment de bord (111a) du corps déformable (111) sont reliés entre eux, notamment par liaison de matière, notamment par soudage.

6. Système de mesure selon l'une des revendications précédentes,
- pour lequel le corps déformable, la languette de capteur et le dispositif de protection contre les surcharges sont dimensionnés et disposés de telle sorte que, lorsque la languette de capteur se trouve dans la même position statique de repos que le corps déformable, ladite languette n'entre en contact ni avec l'étrier de support, ni avec l'une des butées ; et/ou
- pour lequel le corps déformable, la languette de capteur et le dispositif de protection contre les surcharges sont dimensionnés et disposés de telle sorte que, lorsque la languette de capteur se trouve dans la même position statique de repos que le corps déformable, un espace est formé entre la languette de capteur et chacune des deux butées, notamment de telle sorte que chacun des espaces présente une largeur minimale supérieure à 0,02 mm et/ou inférieure à 0,2 mm, et/ou que la languette de capteur n'entre en contact avec aucune des butées ; et/ou
- pour lequel le corps déformable, la languette de capteur et le dispositif de protection contre les surcharges sont dimensionnés et disposés de telle sorte que, lorsque la languette de capteur se trouve dans une position de repos statique commune avec le corps déformable, un espace est formé entre la languette de capteur et l'étrier de support, notamment de telle sorte que l'espace présente une largeur minimale supérieure à 0,02 mm et/ou que la languette de capteur n'entre pas en contact avec l'étrier de support.

7. Système de mesure selon l'une des revendications précédentes,
- pour lequel la languette de capteur présente un prolongement, notamment terminal et/ou en forme de tige,
- et pour lequel le corps déformable, la languette de capteur et le dispositif de protection contre les surcharges sont dimensionnés et disposés de telle sorte que ledit prolongement pénètre dans l'espace intermédiaire formé entre les butées.

8. Système de mesure selon la revendication précédente, pour lequel les butées sont formées par des segments de bord d'un évidement prévu dans un étrier de support, notamment sous la forme d'une ouverture de passage ou d'un perçage, l'espace intermédiaire étant formé par un canal intérieur dudit évidement, lequel canal est entouré par les segments de bord.

9. Système de mesure selon l'une des revendications précédentes,
- pour lequel le corps déformable et le dispositif de protection contre les surcharges sont reliés entre eux par liaison de matière, notamment soudés ou brasés l'un à l'autre ; et/ou
- pour lequel le corps déformable et la languette de capteur sont reliés entre eux par liaison de matière, notamment soudés ou brasés l'un à l'autre ; et/ou
- pour lequel le dispositif de protection contre les surcharges est constitué au moins en partie, notamment principalement ou entièrement, d'un métal, notamment d'un acier inoxydable ou d'un alliage à base de nickel ; et/ou
- pour lequel le corps déformable et le dispositif de protection contre les surcharges sont constitués du même matériau ; et/ou
- pour lequel le corps déformable et le dispositif de protection contre les surcharges sont des composants d'une seule et même pièce moulée monolithique, notamment moulée ou fabriquée par fusion laser 3D ; et/ou
- pour lequel le corps déformable est constitué au moins en partie, notamment principalement ou entièrement, d'un métal, notamment d'un acier inoxydable ou d'un alliage à base de nickel ; et/ou
- pour lequel la languette de capteur est constituée au moins en partie, notamment principalement ou entièrement, d'un métal, notamment d'un acier inoxydable ou d'un alliage à base de nickel ; et/ou
- pour lequel le corps déformable et la languette de capteur sont constitués du même matériau ; et/ou
- pour lequel le corps déformable et la languette de capteur sont des composants d'une seule et même pièce moulée monolithique, notamment moulée ou fabriquée par fusion laser 3D.

10. Système de mesure selon l'une des revendications précédentes,
- pour lequel l'étrier de support est guidé au moins en partie sur le côté gauche de la languette de capteur ; et/ou
- pour lequel l'étrier de support est guidé au moins en partie sur le côté droit de la languette de capteur ; et/ou
- pour lequel l'étrier de support est guidé au moins en partie sur le côté avant de la languette de capteur ; et/ou
- pour lequel l'étrier de support est guidé au moins en partie sur le côté arrière de la languette de capteur ; et/ou
- pour lequel le dispositif de protection contre les surcharges est formé au moyen d'une seule pièce moulée monolithique ; et/ou
- la première butée, la deuxième butée et l'étrier de support étant des parties intégrantes d'une seule et même pièce moulée monolithique ; et/ou
- les butées étant formées au moins en partie par des segments de bord d'un évidement prévu dans l'étrier de support ; et/ou
- l'espace intermédiaire étant formé au moins en partie par un canal intérieur d'un évidement prévu dans l'étrier de support ; et/ou
- au moins une surface d'étanchéité, notamment périphérique et/ou en forme annulaire, étant formée dans le segment de bord extérieur (111a).

11. Système de mesure selon l'une des revendications précédentes, pour lequel l'étrier de support présente une silhouette en forme de U.

12. Système de mesure selon l'une des revendications 1 à 10, pour lequel l'étrier de support présente une silhouette en forme de V.

13. Système de mesure selon l'une des revendications 1 à 10, pour lequel l'étrier de support présente une silhouette en forme de L.

14. Système de mesure selon l'une des revendications précédentes,
- pour lequel une ouverture (3") est formée dans la paroi du tube (3), laquelle ouverture comporte notamment un logement (3a) servant à maintenir le corps déformable (111) sur la paroi,
- et pour lequel le capteur (1) est inséré dans ladite ouverture (3") de telle sorte que le corps déformable (111) recouvre l'ouverture (20'), notamment la ferme hermétiquement, et que la première surface du corps déformable (111) est tournée vers le canal intérieur (3') du tube, de sorte que la languette de capteur pénètre dans ledit canal intérieur.

15. Système de mesure selon la revendication précédente, pour lequel l'ouverture (3") comporte un logement (3a) servant à maintenir le corps déformable (111) sur la paroi.

16. Système de mesure selon la revendication précédente, pour lequel au moins une surface d'étanchéité, notamment périphérique et/ou annulaire, est formée dans le logement (3a).

17. Système de mesure selon la revendication précédente,
- pour lequel au moins une surface d'étanchéité, notamment périphérique et/ou annulaire, est formée dans le segment de bord, et
- pour lequel ladite surface d'étanchéité et la surface d'étanchéité du logement sont conçues pour fermer hermétiquement l'ouverture, notamment également avec l'interposition d'au moins un joint d'étanchéité.

18. Système de mesure selon l'une des revendications précédentes,
- pour lequel la longueur de la languette de capteur (112) correspond à plus d'une moitié dudit calibre (DN) ; et/ou
- pour lequel la longueur du dispositif de protection contre les surcharges correspond à plus d'une moitié dudit calibre (DN) ; et/ou
- pour lequel le capteur (1) est conçu pour mesurer les variations de pression dans le fluide s'écoulant dans une direction d'écoulement principale au niveau du capteur, et l'étrier de support étant guidé au moins en partie à l'avant, c'est-à-dire en amont de la languette de capteur dans la direction d'écoulement principale, et/ou au moins en partie à l'arrière, c'est-à-dire en aval de la languette de capteur dans la direction d'écoulement principale.

19. Utilisation d'un système de mesure selon l'une des revendications précédentes, lequel système est destiné à mesurer un paramètre d'écoulement - notamment une vitesse d'écoulement et/ou un débit volumique et/ou un débit massique - d'un fluide, notamment une vapeur, s'écoulant dans une conduite, notamment présentant au moins par moments une température supérieure à 400 °C et/ou agissant au moins par moments avec une pression supérieure à 140 bar sur le corps déformable et/ou la languette de capteur.
